# EUROPEAN PATENT APPLICATION

(11) **EP 4 597 678 A1**
(43) Date of publication of application: **06.08.2025**
(21) Application number: 23925683.7
(22) Date of filing: 03.03.2023
(51) Int. Cl.: H01M 10/058, H01M 10/04

(54) **BATTERY CELL, BATTERY, AND ELECTRIC APPARATUS**

(71) Applicant: Contemporary Amperex Technology (Hong Kong) Limited, Central (HK)
(72) Inventor: LIN, Wenfa, Ningde, Fujian 352100 (CN); KONG, Pan, Ningde, Fujian 352100 (CN); TANG, Minghao, Ningde, Fujian 352100 (CN); ZHANG, Shengwu, Ningde, Fujian 352100 (CN)
(74) Representative: Ran, Handong
(86) International application number: PCT/CN2023/079690
(87) International publication number: WO 2024/182957

(57) **Abstract**

Disclosed in the present application are a battery cell, a battery, and an electric apparatus. The battery cell comprises: a housing, comprising a housing cover and a housing body; a battery cell assembly, comprising an active substance-coated part; and a support arranged at the end of the active substance-coated part distal to the opening of the housing body and fitting the battery cell assembly. The support is provided with a body part and an extension part arranged circumferentially on the body part. The projection of the body part on the plane of the housing cover is within the projection of the active substance-coated part on the plane of the housing cover, and the projection of the extension part on the plane of the housing cover is located outside the projection of the active substance-coated part on the plane of the housing cover. The embodiments of the present application can reduce the probability that the active substance-coated part touches the housing and that the housing scratches the active substance-coated part.

## Description

### TECHNICAL FIELD

The present application relates to the field of batteries, and in particular, to a battery cell, a battery, and an electric device.

### BACKGROUND

Energy conservation and emission reduction are the key to sustainable development of the automobile industry. Electric vehicles have become an important part for the sustainable development of the automobile industry due to their energy-saving and environmental protection advantages. For the electric vehicles, the battery technology is an important factor in their development. In the related art, improving the reliability of battery cells is an urgent problem to be solved.

### SUMMARY

In view of the above problems, the present application provides a battery cell, a battery, and an electric device. The support of the battery cell can improve the reliability of the battery cell.

In a first aspect, the present application provides a battery cell, including: a housing, including a housing cover and a housing body provided with an opening, the housing cover lidding the opening; a battery cell assembly, including an active substance-coated part, the active substance-coated part being arranged in the housing; and a support, arranged at the end of the active substance-coated part distal to the opening and fitting the battery cell assembly, where the support is provided with a body part and an extending part arranged on the circumference of the body part; the projection of the body part on the plane of the housing cover is located within the projection of the active substance-coated part on the plane of the housing cover, and the projection of the extending part on the plane of the housing cover is located outside the projection of the active substance-coated part on the plane of the housing cover.

In the technical solution of the embodiment of the present application, by arranging the support at the end of the active substance-coated part distal to the opening and arranging the projection of the body part on the plane of the housing cover within the projection of the active substance-coated part on the plane of the housing cover before they are housed together, in the process of loading the battery cell assembly with the support into the housing, the support will first contact the housing body, thereby preventing, to some extent, the end of the housing body proximal to the opening from directly contacting the active substance-coated part and reducing the probability of the housing scratching the active substance-coated part. By arranging the projection of the extending part on the plane of the housing cover outside the projection of the active substance-coated part on the plane of the housing cover, the active substance-coated part can be protected in the housing process, thus reducing the probability that the active substance-coated part contacts the housing and further reducing the probability of the housing scratching the active substance-coated part. In addition, the arrangement of the support may also reduce the probability of the housing scratching the active substance-coated part to decrease the fall-off probability of the active substance. This, to some extent, prevents internal short circuits due to the connection of the fallen active substance and the opposite electrode plate, and also, to some extent, prevents the chemical reaction between the fallen active substance and the housing, which may cause the corrosion and rupture of the housing and further improve the reliability of the battery cell.

In some embodiments, the location of the extending parts on two opposite sides of the body part in a preset direction parallel to the plane of the housing cover can prevent the edges of two opposite sides of the active substance-coated part from contacting the housing, thereby preventing the housing from scratching the edges of the two opposite sides of the active substance-coated part.

In some embodiments, the extending part is an annular structure surrounding the body part. The support can protect the outer edge of one end of the active substance-coated part and prevent the outer edge on the side of the active substance-coated part proximal to the support from contacting the housing, thereby preventing the housing from scratching the active substance-coated part and further improving the reliability of the battery cell.

In some embodiments, the edge of the surface of the extending part facing away from the housing cover is provided with a guiding surface including an arc-shaped surface and/or an inclined surface. The guiding surface can play a guiding role, such that the support can be smoothly loaded into the housing body, thereby improving the assembly efficiency.

In some embodiments, the connection of the support to the battery cell assembly by snap-fit or bonding may, to some extent, prevent the support from falling off before housing, thereby increasing the yield of the battery cell. Housing the support and the battery cell assembly together may also protect the battery cell assembly and ensure the smooth and safe housing of the battery cell assembly, while providing insulation.

In some embodiments, a limiting protruding part is arranged on the side of the extending part proximal to the housing cover, and the support is in snap-fit with the active substance-coated part via the limiting protruding part. With such a configuration, the limiting protruding part can restrain one end of the active substance-coated part, reduce the fluffing probability of the outer layer of the active substance-coated part, protect the end of the active substance-coated part, and prevent the end of the active substance-coated part from contacting the housing, thereby preventing the housing from scratching the active substance-coated part. The snap-fit of the support with the active substance-coated part via the limiting protruding part can, to some extent, prevent the support from falling off before housing, thereby increasing the yield of the battery cell.

In some embodiments, the surface of the limiting protruding part on the side facing the active substance-coated part includes: a first surface fitting a side wall of the active substance-coated part; and/or a second surface with a distance to the active substance-coated part gradually increasing in a direction from the support toward the opening. The first surface and the second surface can restrain the battery cell assembly, reduce the fluffing probability of the outer layer of the battery cell assembly, protect the side wall of the battery cell assembly, and alleviate the contact problem of the end of the battery cell assembly with the housing. The second surface can play a guiding role in facilitating the assembly and improving the assembly efficiency of the battery cell assembly and the support.

In some embodiments, the battery cell further includes: an insulating member, wrapped around the active substance-coated part and connected to the extending part. The insulating member located between the active substance-coated part and the housing may provide an insulating effect, protect the battery cell assembly, and prevent the battery cell assembly from connection to the housing of the battery cell, effectively reducing the corrosion due to the exposure of the battery cell assembly. The insulating member is connected to the extending part to help secure the insulating member.

In some embodiments, connecting the insulating member to a circumferential wall surface of the extending part can improve the connection reliability between the insulating member and the circumferential wall of the support, thus reducing the fall-off risk of the insulating member.

In some embodiments, the circumferential wall surface is provided with a first step surface and a second step surface; the second step surface is located on the side of the first step surface proximal to the housing cover, and the second step surface is closer to the active substance-coated part than the first step surface is; the insulating member is connected to the second step surface. In the above technical solution, configuring the circumferential wall surface to include the first step surface and the second step surface can provide a mounting space for the insulating member. Connecting the insulating member to the second step surface can reduce the fall-off risk of the connection structure between the insulating member and the second step surface due to scratching the housing and further improve the connection reliability between the insulating member and the support.

In some embodiments, the first step surface is farther from the active substance-coated part than an outer side surface of the insulating member is. The first step surface can protect the edge of the insulating member and the edge of the active substance-coated part, prevent the edge of the insulating member and the edge of the active substance-coated part from scratching the inner wall of the housing, protect the connection position between the insulating member and the second step surface, reduce the fall-off risk of the connection structure between the insulating member and the second step surface due to scratching the housing, and further improve the connection reliability between the insulating member and the support.

In some embodiments, the battery cell further includes: an insulating member wrapped around the active substance-coated part and connected to the surface of the body part distal to the housing cover. Such a configuration can, when loading the battery cell assembly with the support into the housing, prevent the housing from scratching the edge of the insulating member or the connection position between the insulating member and the body part, prevent the connection position of the two from being pulled apart in a housing process, reduce the movement and slippage of the insulating member in housing the battery cell assembly, and improve the connection reliability between the insulating member and the support, reducing the fall-off risk of the insulating member, the corrosion risk of the housing due to the exposure of the battery cell assembly, the failure risk of the battery cell assembly and the risk of electrolyte leakage, and thus improving the reliability and stability of the battery cell. In addition, connecting at least a part of the insulating member to the wall surface of the body part distal to the battery cell assembly can provide the insulating member with a design with greater dimensions, applicability to battery cell assemblies of different sizes, higher compatibility, and improved manufacturability. Moreover, after the support and the battery cell assembly are mounted in place in the housing, the insulating member is pressed between a wall surface of the housing opposite to an opening and the body part, which can further reduce the fall-off risk of the insulating member, the failure risk of the battery cell assembly due to exposure and the corrosion risk of the housing, thereby improving the reliability and stability of the battery cell.

In some embodiments, a post terminal is arranged on the housing, and a post terminal is arranged on the housing; the battery cell assembly further includes a conductive part connected to the side of the active substance-coated part proximal to the body part; the body part is provided with a via hole, and the conductive part passes through the via hole to be connected to the post terminal. In the above technical solution, the arrangement of the via hole in the body part allows the support to gather and accommodate the conductive part, thus facilitating the connection of the conductive part to the post terminal and improving the assembly reliability and convenience of the battery cell. Also, the support gathers the conductive part, which can reduce the number of plastic members in the battery cell, achieve the insulation between the entire active substance-coated part and the housing through the fit of the support and the insulating member, and effectively reduce the manufacture and production costs.

In some embodiments, the support is of an integrated structure; or, the support is of a split-type structure and includes a first support and a second support that are separately formed, and the first support and the second support define the via hole therebetween. The integrated structure of the support may provide ease to process and good reliability and facilitate the assembly of the support with the housing assembly, thereby improving the assembly efficiency and fitting stability. The first support and the second support fitting and defining the via hole therebetween, when the support is assembled with the battery cell assembly, does not require passing the conductive part through the via hole from one end to the other, but clamps the conductive part by assembling the first support and the second support at the position of the conductive part, such that the via hole surrounds the conductive part, which facilitates the assembly of the support and the battery cell assembly and improves the assembly efficiency.

In some embodiments, a receiving groove in communication with the via hole is arranged on the side of the body part facing away from the active substance-coated part and is configured to accommodate at least a part of the post terminal. In the above technical solution, accommodating at least a part of the post terminal in the receiving groove makes the structure of the entire battery cell more compact and reliable, which is conducive to improving the energy density of the entire battery. Also, the arrangement of the receiving groove enables the insulation of the post terminal from a part of the housing via the support, so as to further improve the stability and reliability of the battery cell.

In some embodiments, a positioning part is arranged on the side of the body part facing away from the active substance-coated part; the positioning part is set on the circumferential direction of the via hole, and extends in a direction toward the post terminal. The positioning part can restrain, gather, and support the conductive part, so as to facilitate the connection of the conductive part to the post terminal, thereby improving the assembly efficiency and assembly quality of the battery cell.

In some embodiments, an accommodating part is arranged on the post terminal; at least a part of the conductive part is accommodated in the accommodating part; at least a part of the positioning part extends into the accommodating part and is configured to guide the conductive part to extend into the accommodating part. In the above technical solution, the configuration of the post terminal into a hollow structure and the fit of the positioning part to the hollow structure can guide the connection of the conductive part to the post terminal, thus improving the connection reliability and ensuring the assembly efficiency and quality. Also, the conductive part can be accommodated in the accommodating part, which can improve the assembly efficiency of the conductive part, save the space occupied by the conductive part, and make full use of the space of the battery cell, thus making the fit of the support to the post terminal and the fit of the support to the conductive part closer and more reliable, making the structure of the battery cell more compact, and improving the energy density of the battery cell.

In some embodiments, a guiding groove in communication with the via hole is formed on the side of the body part facing the active substance-coated part and accommodates at least a part of the conductive part; the cross-sectional area of the guiding groove gradually increases in a direction from the body part toward the active substance-coated part. The guiding groove can accommodate the conductive part and provide clearance for the conductive part to avoid crushing the conductive part, reduce the fluffing and folding probabilities in the conductive part, and reduce redundancy.

In some embodiments, the support is provided with at least one first liquid injection guide groove, and the first liquid injection guide groove is located on the side of the support facing the active substance-coated part; at least one of the first liquid injection guide grooves is in communication with the guiding groove. During the injection, the electrolyte can flow along the first liquid injection guide groove to flow toward the guiding groove, such that the electrolyte can flow to a predetermined position, so as to increase the contact area between the electrolyte and the active substance-coated part. The arrangement of the first liquid injection guide groove increases the contact area between the electrolyte and the active substance-coated part, which can reduce the problem of poor wetting of the active substance-coated part.

In some embodiments, the support is provided with a first liquid injection guide groove, and the first liquid injection guide groove is located on the side of the support facing the active substance-coated part; and/or the support is provided with a second liquid injection guide groove, and the second liquid injection guide groove is located on the side of the support facing away from the active substance-coated part. During the injection, the electrolyte can flow along the first liquid injection guide groove and/or the second liquid injection guide groove, providing a wetting path for the electrolyte, increasing the fluidity of the electrolyte and the injection speed, and reducing the formation and standing time.

In some embodiments, the side of the support facing the battery cell assembly is provided with a clearance part configured to provide clearance for the outer edge on the side of the battery cell assembly facing the support. The arrangement of the clearance part can remove the rounded corner structure between the limiting protruding part and the body part, so as to prevent the rounded corner structure from crushing the outer edge of the battery cell assembly.

In some embodiments, the battery cell assembly further includes a conductive part connected to the side of the active substance-coated part proximal to the body part; the post terminal is arranged on the housing, the accommodating part is arranged on the post terminal, and at least a part of the conductive part is accommodated in the accommodating part and connected to the post terminal. The accommodation of at least a part of the conductive part in the accommodating part can reduce the space occupied by the battery cell, so as to accommodate a greater number of battery cells in a battery of a given volume and improve the volumetric energy density of the battery. Moreover, the accommodation of at least a part of the conductive part in the accommodating part to occupy the space in the post terminal can reduce the redundancy of the conductive part in the housing to a certain extent, reduce the probability of short circuit between the conductive part and the active substance-coated part, and reduce the probability of short circuit of the battery cell, thus further improving the working reliability and stability of the battery cell and the battery.

In some embodiments, the accommodating part is provided with a first accommodating groove, the surface of the post terminal on the side facing the active substance-coated part is a post terminal inner end surface, an opening of the first accommodating groove is formed on the post terminal inner end surface, and at least a part of the conductive part is accommodated in the first accommodating groove. In the above technical solution, the provision of the first accommodating groove on the post terminal can reduce the weight of the post terminal to a certain extent, so as to improve the gravimetric energy density of the battery cell and the battery. Since the opening of the first accommodating groove is formed on the post terminal inner end surface and the post terminal inner end surface is the surface of the post terminal on the side proximal to the active substance-coated part, the first accommodating groove may be open toward the active substance-coated part, thereby facilitating the conductive part to extend into the first accommodating groove and improving the assembly efficiency. Moreover, the first accommodating groove in this configuration may facilitate processing and thus improve the production efficiency.

In some embodiments, the accommodating part is provided with a second accommodating groove, the surface of the post terminal distal to the active substance-coated part is a post terminal outer end surface, an opening of the second accommodating groove is formed on the post terminal outer end surface, the second accommodating groove is in communication with the interior of the housing through a perforation, and the conductive part is provided in the perforation in a penetrating manner and is at least partially accommodated in the second accommodating groove. In the above technical solution, the arrangement of the second accommodating groove on the post terminal can reduce the weight of the post terminal to a certain extent, so as to improve the gravimetric energy density of the battery cell and the battery. Also, since the opening of the second accommodating groove is formed in the post terminal outer end surface, and the post terminal outer end surface is the surface of the post terminal on the side distal to the active substance-coated part, the second accommodating groove can be opened in a direction away from the active substance-coated part. In this way, when at least a part of the conductive part is accommodated in the second accommodating groove, the storage or sorting of the conductive part or operations on the electrical connection between the conductive part and the post terminal can be easily achieved through the opening of the second accommodating groove, thereby reducing difficulties in producing the battery cell and improving the manufacture efficiency of the battery cell.

In some embodiments, when the openings are provided in a quantity of two, each of the openings is provided with one of the housing covers, and the support is located at the end of the active substance-coated part distal to any one of the openings. In the above technical solution, two openings are arranged in the housing body, and the support is arranged at the end of the battery cell assembly distal to any one of the openings. A battery cell assembly with two supports and the insulating member may be loaded into the housing body from any one of the openings, and a proper housing direction can be selected as needed. After the battery cell assembly is mounted in place in the housing body, a part of the insulating member is pressed between the wall of the housing body opposite to one of the openings and the corresponding support, and the other part of the insulating member is pressed between the wall of the housing body opposite to the other opening and the corresponding support, which further reduces the fall-off risk of the insulating member, the failure risk of the battery cell assembly due to exposure, and the corrosion risk of the housing, thereby improving the reliability and stability of the battery cell.

In some embodiments, at least one post terminal is arranged on a housing wall on the side of the housing proximal to the support. The battery cell assembly with the support and the insulating member enters the housing body through the opening, and the conductive part is directly opposite to the post terminal, so as to facilitate the connection of the conductive part to the post terminal, thereby improving the assembly efficiency of the battery cell.

In a second aspect, the present application provides a battery, including a battery cell according to the above embodiments.

In the above technical solution, since the battery is provided with the above battery cell, the support can restrain the active substance-coated part, and the extending part can protect the active substance-coated part, thus reducing the probability that the active substance-coated part contacts the housing, minimizing the probability of the housing scratching the active substance-coated part, improving the reliability of the battery, simplifying the mounting procedures, and improving the production efficiency.

In a third aspect, the present application provides an electric device, including a battery according to the above embodiments. In the above technical solution, providing the electric device with the above battery and the improved working reliability and stability of the battery can improve the working reliability and stability of the electric device.

The above description is only an overview of the technical solution of the present application. For a better understanding, the technical means of the present application can be implemented in accordance with the disclosure of the specification. To make the above and other objectives, features, and advantages of the present application clearer and understandable, the detailed description of the present application is provided below.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a structural schematic view of a vehicle according to some embodiments of the present application;
FIG. 2 is an exploded view of a battery according to some embodiments of the present application;
FIG. 3 illustrates a battery according to some embodiments of the present application;
FIG. 4 is an exploded view of a battery cell according to some embodiments of the present application;
FIG. 5 is a cross-sectional view of a battery cell according to some embodiments of the present application;
FIG. 6 is an enlarged view of the battery cell shown in FIG. 5 at portion A;
FIG. 7 is a front view of a battery cell according to some embodiments of the present application;
FIG. 8 is a front view of a battery cell according to some other embodiments of the present application;
FIG. 9 is a partial cross-sectional view of a battery cell according to some embodiments of the present application;
FIG. 10 is a partial cross-sectional view of a battery cell according to some other embodiments of the present application;
FIG. 11 is a partial cross-sectional view of a battery cell according to yet some other embodiments of the present application;
FIG. 12 is a partial cross-sectional view of a battery cell according to still some other embodiments of the present application;
FIG. 13 is a cross-sectional view of a battery cell where a battery cell assembly is assembled with a support and an insulating member according to some embodiments of the present application;
FIG. 14 is an enlarged view of the battery cell shown in FIG. 13 at portion B;
FIG. 15 is a cross-sectional view of a battery cell where a battery cell assembly is assembled with a support and an insulating member according to some other embodiments of the present application;
FIG. 16 is a structural schematic view of a support of a battery cell according to some embodiments of the present application;
FIG. 17 is a structural schematic view of a support of a battery cell according to some other embodiments of the present application;
FIG. 18 is a partial cross-sectional schematic view of a battery cell according to some embodiments of the present application;
FIG. 19 is a cross-sectional view of a support of a battery cell according to some embodiments of the present application;
FIG. 20 is a top view of a support of a battery cell according to some embodiments of the present application;
FIG. 21 is a top view of a support of a battery cell according to some other embodiments of the present application;
FIG. 22 is a partial cross-sectional schematic view of a battery cell according to some embodiments of the present application;
FIG. 23 is a partial cross-sectional schematic view of a battery cell according to some embodiments of the present application;
FIG. 24 is a partial cross-sectional schematic view of a battery cell according to some embodiments of the present application;
FIG. 25 is a partial cross-sectional schematic view of a battery cell according to some embodiments of the present application;
FIG. 26 is a partial cross-sectional schematic view of a battery cell according to some embodiments of the present application;
FIG. 27 is a partial cross-sectional schematic view of a battery cell according to some embodiments of the present application;
FIG. 28 is an exploded view of the battery cell shown in FIG. 27;
FIG. 29 is an exploded view of the first cover plate shown in FIG. 28;
FIG. 30 is a partial cross-sectional schematic view of a battery cell according to some embodiments of the present application;
FIG. 31 is an exploded view of the battery cell shown in FIG. 30;
FIG. 32 is an assembly schematic of a battery cell according to some embodiments of the present application;
FIG. 33 is an assembly schematic of a battery cell according to some other embodiments of the present application.

### Reference numerals:

electric device 1000, battery 100, controller 200, motor 300,
first direction Z, second direction X, third direction Y, axial direction R of post terminal,
battery cell 10, case 20, first case 201, second case 202,
housing 11, housing body 111, opening 1110, mounting wall 1112, housing cover 112, first housing cover 1121, second housing cover 1122, mounting hole 113,
post terminal 12, accommodating part 121, first accommodating groove 12110, first end wall 12111, first recess 12112, first side wall 12113, second accommodating groove 12120, second end wall 12121, second recess 12122, second side wall 12123, first groove segment 12124, second groove segment 12125, inclined guiding surface 12126, third step surface 12127, perforation 12130, post terminal inner end surface 122, post terminal outer end surface 123, first groove 126, spacer part 127,
first cover plate 13; first conductive member 131; second groove 1311; second conductive member 132; stress relief groove 133;
second cover plate 14;
battery cell assembly 2, first end 201, second end 202, active substance-coated part 21, conductive part 22,
support 3, via hole 311, guiding groove 312, positioning part 32, first support 33, second support 34, guiding surface 35, body part 36, extending part 37, circumferential wall surface 370, first step surface 371, second step surface 372, limiting protruding part 38, first surface 381, second surface 382, clearance part 391, first liquid injection guide groove 392, receiving groove 393,
insulating member 4, connection mark 401,
groove cover 7.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the claimed scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/" .

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality" used in the present application refers to two or more (including two).

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments disclosed in the present application can be interpreted according to the specific condition.

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and soft-pack battery cells, which are not limited in the embodiments of the present application.

The battery described in embodiments of the present application refers to a single physical module including one or more battery cells to provide a higher voltage and capacity. For example, the battery mentioned in the present application may be a battery module, a battery pack, or the like. A battery module generally includes a plurality of battery cells. The battery pack generally includes a case and one or more battery cells arranged in the case, or the battery pack includes a case and one or more battery modules arranged in the case. The case can prevent liquid or other foreign matter from affecting the charging or discharging of the battery cell.

Illustratively, the battery cell may generally include a housing, an electrode assembly, and an electrolyte. The housing is configured to accommodate the electrode assembly and the electrolyte, and at least one positive electrode post terminal and at least one negative electrode post terminal are arranged on the housing. The electrode assembly is formed by stacking or winding a positive electrode plate, a negative electrode plate, and a separation film.

The positive electrode plate may generally include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab plate, and a plurality of positive electrode tab plates are stacked together and electrically connected to the positive electrode post terminal. The negative electrode plate may generally include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. The material of the separation film is not limited, such as polypropylene or polyethylene.

Meanwhile, a battery cell primarily works by the movement of metal ions between the positive electrode plate and the negative electrode plate. Taking lithium-ion batteries as an example, the material of the positive electrode current collector may be aluminum, the material of the positive electrode active substance layer may be lithium cobaltate, lithium iron phosphate, ternary lithium, lithium manganate, etc., the material of the negative electrode current collector may be copper, and the material of the negative electrode active substance layer may be carbon, silicon, etc. During the charging and discharging processes, Li+ is intercalated or deintercalated back and forth between the two electrodes: during charging, Li+ is deintercalated from the positive electrode, and intercalated into the negative electrode through the electrolyte, and the negative electrode is in a lithium-rich state; during discharging, the process is reversed.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, electric cars, as well as in military equipment, aerospace, and other fields. As the application of the power batteries becomes broader, the market demand thereof is also increasing.

In the related art, during the manufacturing of a battery cell, the current collector is coated with an active substance layer and then cut to give an electrode plate consisting of a current collector coated with the active substance layer (referred to as the active substance-coated part) and a current collector not coated with the active substance layer (referred to as a tab plate). Then, the positive and negative electrode plates and a separation film are stacked or wrapped in sequence to give the electrode assembly. In the electrode assembly, a plurality of tab plates are stacked to form a tab part. The tab part forms the conductive part, or the tab part is connected to an adapting piece to form the conductive part. The active substance-coated part and the conductive part form the battery cell assembly. The housing cover of the battery cell is provided with a post terminal. During the assembly of the battery cell, the conductive part of the battery cell assembly is usually welded to the post terminal on the housing cover, and the two are then housed through the opening of the housing body.

However, the inventors have found that in the process of loading the battery cell assembly into the housing through the opening, the insulating member and the battery cell assembly (especially the edge of the battery cell assembly) are likely to interfere with or scratch the housing, causing damage to the insulating member and the electrode plate of the battery cell assembly and leading to the fall-off of the active substance and thus internal short circuits due to the connection of the active substance to the opposite electrode plate. In addition, the insulating member is likely to wrinkle due to the friction with the housing, leading to a contact between the battery cell assembly and the inner wall surface of the housing and thus the corrosion of the battery cell assembly, and affecting the reliability of the battery cell.

In order to alleviate the problem of the housing scratching the battery cell assembly, in the present application, by arranging the support at the end of the active substance-coated part distal to the opening and arranging the projection of the body part on the plane of the housing cover within the projection of the active substance-coated part on the plane of the housing cover before they are housed together, in the process of loading the battery cell assembly with the support into the housing, the support will first contact the housing body, thereby preventing, to some extent, the end of the housing body proximal to the opening from directly contacting the active substance-coated part and reducing the probability of the housing scratching the active substance-coated part. By arranging the projection of the extending part on the plane of the housing cover outside the projection of the active substance-coated part on the plane of the housing cover, the active substance-coated part can be protected in the housing process, thus reducing the probability that the active substance-coated part contacts the housing and further reducing the probability of the housing scratching the active substance-coated part. The arrangement of the support may also reduce the probability of the housing scratching the active substance-coated part to decrease the fall-off probability of the active substance. This, to some extent, prevents internal short circuits due to the connection of the fallen active substance and the opposite electrode plate, and also, to some extent, prevents the chemical reaction between the fallen active substance and the housing, which may cause the corrosion and rupture of the housing and further improve the reliability of the battery cell.

The battery cell disclosed in embodiments of the present application can be used in electric devices that use batteries as the power source or in various energy storage systems that use batteries as the energy storage element. The electric device may be, but is not limited to, a mobile phone, a tablet or laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

Taking a vehicle as an example of the electric device according to one embodiment of the present application, structures of the battery cell, the battery, and the electric device according to embodiments of the present application are described in detail.

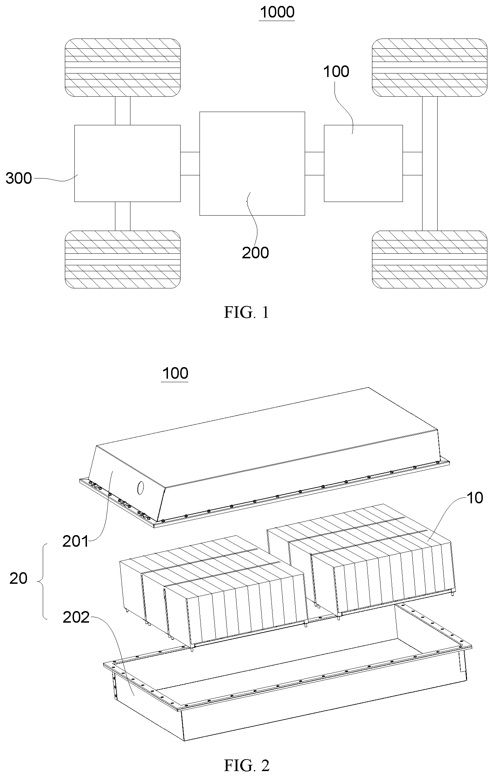

Referring to FIG. 1, FIG. 1 is a structural schematic view of an electric device 1000 according to some embodiments of the present application as a vehicle. The vehicle may be a fuel vehicle, a gas vehicle, or a new energy vehicle. The new energy vehicle may be a pure electric vehicle, a hybrid vehicle, an extended-range vehicle, or the like. A battery 100 is arranged in the vehicle, and the battery 100 may be arranged at the bottom, head, or tail of the vehicle. The battery 100 may be used for powering the vehicle. For example, the battery 100 may serve as an operation power source for the vehicle. The vehicle may further include a controller 200 and a motor 300. The controller 200 is configured to control the battery 100 to power the motor 300, e.g., for operation power needed by the vehicle for start-up, navigation, and driving. In some embodiments of the present application, the battery 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery 100 according to some embodiments of the present application. The battery 100 includes a case 20 and a plurality of battery cells 10, and the battery cells 10 are accommodated in the case 20. The case 20 is configured to provide an accommodating space for the battery cell 10, and the case 20 may have a variety of structures. In some embodiments, the case 20 may include a first case 201 and a second case 202. The first case 201 and the second case 202 are lidded with each other. The first case 201 and the second case 202 jointly define the accommodating space for accommodating the battery cell 10. The second case 202 may be of a hollow structure with one end open, and the first case 201 may be of a plate structure. The open side of the second case 202 is lidded with the first case 201, such that the first case 201 and the second case 202 jointly define the assembly space. Alternatively, the first case 201 and the second case 202 may both be of a hollow structure with one side open (e.g., as shown in FIG. 2), and the open side of the second case 202 is lidded with the open side of the first case 201. Certainly, the case 20 formed by the first case 201 and the second case 202 can have various shapes, such as a cylinder, a cuboid, etc.

In the battery 100, the plurality of battery cells 10 may be connected in series, in parallel, or in series-parallel. The series-parallel connection means that both series connection and parallel connection are present for the connection among the plurality of battery cells 10. The plurality of battery cells 10 can be directly connected in series, in parallel, or in a mixed connection, and then the whole formed by the plurality of battery cells 10 is accommodated in the case 20. Alternatively, the battery 100 may also be in a form where a plurality of battery cells 10 are first connected in series, in parallel, or in a mixed connection to give a battery module, and then a plurality of battery modules are connected in series, in parallel, or in a mixed connection to form a whole and accommodated in the case 20. The battery 100 may further include additional structures. For example, the battery 100 may further include a busbar component for achieving the electrical connection between the plurality of battery cells 10.

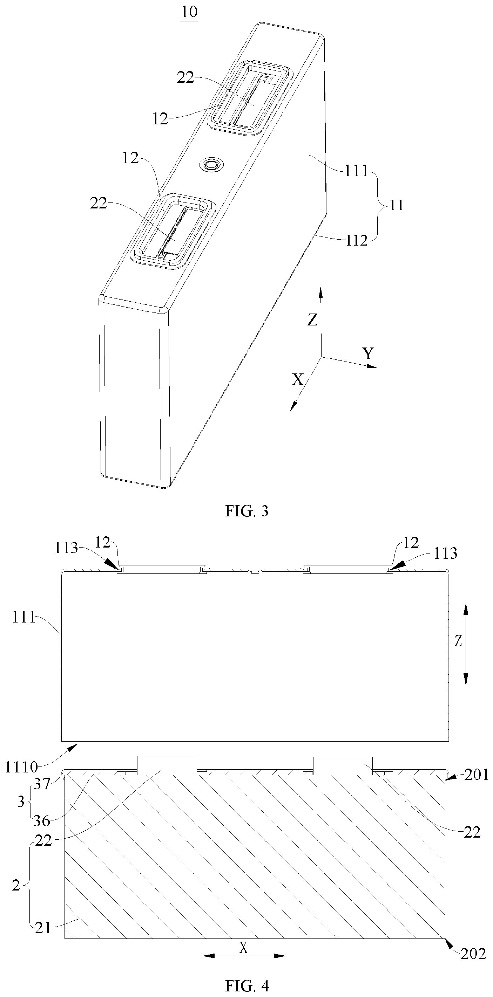

Referring to FIG. 3, FIG. 3 illustrates a schematic view of a battery cell 10 according to some embodiments of the present application. In the embodiments of the present application, the battery cell 10 is in the shape of a cuboid, and the height direction of the battery cell 10 is a first direction Z, the length direction of the battery cell 10 is a second direction X, and the thickness direction of the battery cell 10 is a third direction Y. The first direction Z, the second direction X, and the third direction Y are perpendicular to each other, Certainly, in other embodiments of the present application, the battery cell 10 may also be cylindrical, flat, or in other shapes, which is not limited in this embodiment.

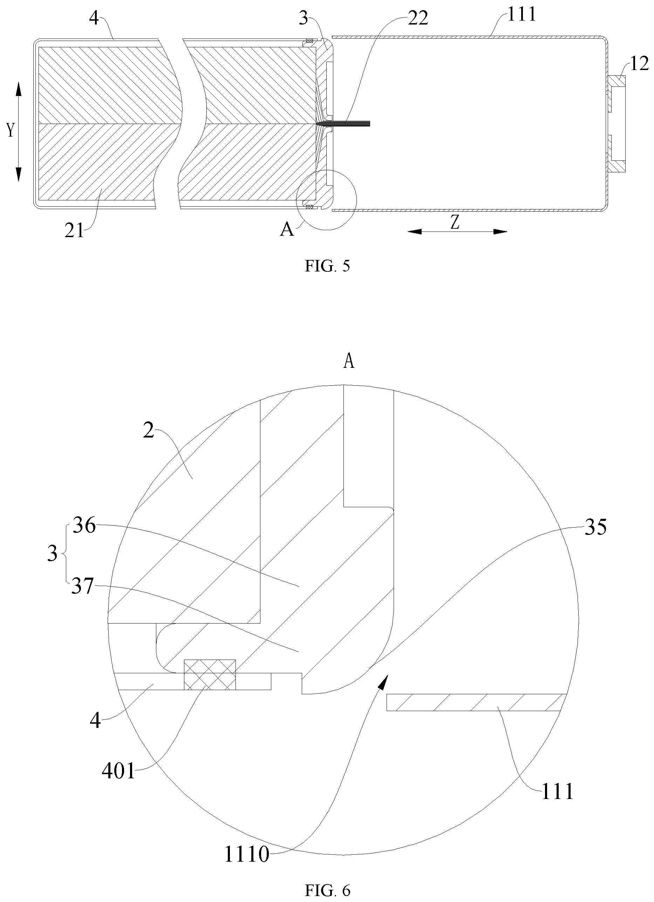

Referring to FIGs. 4 and 5, FIG. 4 is an exploded view of a battery cell according to some embodiments of the present application. FIG. 5 is a cross-sectional view of a battery cell according to some embodiments of the present application. In the embodiments of the present application, the battery cell 10 includes a housing 11, a battery cell assembly 2, a support 3, and an insulating member 4.

The shape of the housing 11 is adjusted according to the type of the battery cell 10, and the type of the battery cell 10 in the embodiments of the present application is not limited. For example, when the battery cell 10 is a square battery, the housing 11 is square, and when the battery cell 10 is a cylindrical battery, the housing 11 is cylindrical. The embodiments of the present application are all described by taking the housing 11 as a square as an example. Also, a post terminal 12 is arranged on the housing 11. The post terminal 12 is configured to be electrically connected to the battery cell assembly 2 to ensure the normal charging and discharging operations of the battery cell 10. Generally, the number of post terminals is at least two, specifically including at least one positive electrode post terminal and at least one negative electrode post terminal. For example, when the number of post terminals is two, one is a positive electrode post terminal and the other is a negative electrode post terminal, and the two are electrically connected to positive and negative output positions of the battery cell assembly 2, respectively. For another example, when the number of post terminals is four, two may be positive electrode post terminals and two may be negative electrode post terminals. In this case, the two positive electrode post terminals are both electrically connected to a positive output position of the battery cell assembly 2, and the two negative electrode post terminals are both electrically connected to a negative output position of the battery cell assembly 2. A pressure relief mechanism for relieving the internal pressure when the internal pressure or temperature of the battery cell 10 reaches a threshold may also be arranged on the housing 11. The pressure relief mechanism can relieve the pressure when the internal pressure or temperature of the battery cell 10 is excessive to prevent thermal runaway from being transmitted to other battery cells 10.

Furthermore, in the embodiments of the present application, the housing 11 specifically includes a housing body 111 and a housing cover 112.

The housing body 111 is of a partially closed structure with an opening 1110 at one end, or of an annular structure with openings 1110 at both ends. Also, the housing body 111 may have a variety of shapes and sizes, such as a cuboid shape, a cylindrical shape, a hexagonal prism shape, etc. The shape of the housing body 111 may be determined according to the specific shape and size of the battery cell assembly 2. The housing body 111 may be made of a variety of materials, such as copper, iron, aluminum, stainless steel, an aluminum alloy, plastic, etc., which is not specified in the embodiments of the present application. The housing body 111 is provided with an opening 1110, and the number of the opening 1110 may be one or more.

The housing cover 112 refers to a component that lids the opening 1110 of the housing body 111 to isolate the internal environment of the battery cell 10 from the external environment. Furthermore, the number of the housing cover 112 is consistent with the number of the opening 1110. When one opening 1110 is present, the number of the housing cover 112 is also one, and the housing cover lids the opening 1110 to close the opening 1110. When two openings 1110 are present, the number of the housing cover 112 is two, and the housing covers separately lid the two openings 1110 to close the corresponding openings 1110. The housing cover 112 and the housing body 111 may form a common connection surface before other components are housed, and when the interior of the housing body 111 needs to be encapsulated, the housing cover 112 lids the housing body 111. Also, the shape of the housing cover 112 may be adapted to the shape of the housing body 111 so as to match the housing body 111. Optionally, the housing cover 112 may be made of a material with a certain hardness and strength (for example, aluminum alloy), such that the housing cover 112 is not easily deformed when being squeezed or collided. This provides the battery cell 10 with higher structural strength and improved safety performance. Functional components such as the post terminal 12 may be arranged on the housing cover 112. The housing cover 112 may also be made of a variety of materials, such as copper, iron, aluminum, stainless steel, an aluminum alloy, plastic, etc., which is not specified in the embodiments of the present application.

When a plurality of post terminals 12 are arranged on the housing 11, the plurality of post terminals 12 may be all arranged on the housing body 111 or all arranged on the housing cover 112, or a part of the post terminals 12 are arranged on the housing body 111 and the others are arranged on the housing cover 112. The following embodiments of the present application are all described on the basis of a square housing body 111, one opening 1110 in the housing body 111, and two post terminals 12 (a positive post terminal and a negative post terminal) arranged on the wall body of the housing body 111 opposite to the opening 1110, as an example. Certainly, in other embodiments of the present application, the shape of the housing body 111, the number of the opening 1110 and the housing cover 112, the number of the post terminal 12, and the position of the post terminal 12 may be all adjusted as needed, which is not limited in the embodiments of the present application.

In the embodiments of the present application, the battery cell assembly 2 includes an active substance-coated part 21 and a conductive part 22. The active substance-coated part 21 is arranged in the housing 11. The active substance-coated part 21 is a part of the battery cell assembly 2 coated with an active substance, and can assist in the deintercalation of metal ions during the charging and discharging processes of the battery cell 10. The conductive part 22 is of a metal structure that electrically connects the active substance-coated part 21 and the post terminal 12, and is not coated with the active substance. The post terminal 12 may be electrically connected to the active substance-coated part 21 through the conductive part 22, so as to ensure charging and discharging operations of the battery cell 10. The conductive part 22 may be formed by the tab plates or may be formed by connecting the tab plates to the adapting piece.

The active substance-coated part 21 is divided into a positive electrode active substance-coated part and a negative electrode active substance-coated part. The positive electrode active substance-coated part includes a part in which the positive electrode current collector is coated with a positive electrode active substance layer, and the negative electrode active substance-coated part includes a part in which the negative electrode current collector is coated with a negative electrode active substance layer. The conductive part 22 is divided into a positive electrode conductive part and a negative electrode conductive part. The positive electrode conductive part electrically connects the positive electrode active substance-coated part and the positive electrode post terminal, and the negative electrode conductive part electrically connects the negative electrode active substance-coated part and the negative electrode post terminal.

In the embodiments of the present application, referring to FIGs. 4 and 5 again, the support 3 is arranged at the end of the active substance-coated part 21 distal to the opening 1110 and fits the battery cell assembly 2. In the embodiment where one opening 1110 is present in the housing body 111, in the process of loading the battery cell assembly 2 with the support 3 into the housing 11, the support 3 first enters the housing body 111 from the opening 1110 of the housing body 111, and then the active substance-coated part 21 enters the housing body 111. After the battery cell assembly 2 is mounted in place in the housing body 111, the support 3 is located at the wall of the housing body 111 opposite to the opening 1110 thereof and the end of the active substance-coated part 21 distal to the opening 1110. In the embodiment where two openings 1110 are present in the housing body 111, the two openings 1110 may be a first opening and a second opening arranged opposite to each other. In the process of loading the battery cell assembly 2 with the support 3 into the housing 11, the support 3 first enters the housing body 111 through the first opening of the housing body 111 and moves toward the second opening, and then the active substance-coated part 21 enters the housing body 111. After the battery cell assembly 2 is mounted in place in the housing body 111, the support 3 is located at the second opening.

The insulating member 4 is wrapped around the active substance-coated part 21. The insulating member 4 can improve the insulation reliability between the active substance-coated part 21 and the housing 11, reduce or prevent the corrosion of the housing 11 due to the contact between the active substance-coated part 21 and the housing 11, reduce the leakage of the electrolyte due to the corrosion of the housing 11, and improve the reliability of the battery cell 10.

Referring to FIGs. 4 and 5 again, the support 3 is provided with a body part 36 and an extending part 37 arranged on the circumference of the body part 36. The projection of the body part 36 on the plane of the housing cover 112 is located within the projection of the active substance-coated part 21 on the plane of the housing cover 112, and the projection of the extending part 37 on the plane of the housing cover 112 is located outside the projection of the active substance-coated part 21 on the plane of the housing cover 112. In other words, in a direction perpendicular to the housing cover 112, the projection of the support 3 on the plane of the housing cover 112 at least partially exceeds the projection of the active substance-coated part 21 on the plane of the housing cover 112.

The support 3 may be of a plate structure. The support 3 may be arranged on the side of the active substance-coated part 21 with the conductive part 22, and may be provided with a clearance structure configured to provide clearance for the conductive part 22 (such as a clearance groove, a via hole 311 described below, etc.). The support 3 may also be arranged on the side of the active substance-coated part 21 without the conductive part 22, such that the support 3 does not require the clearance structure configured to provide clearance for the conductive part 22.

When the support 3 is arranged on the side of the active substance-coated part 21 with the conductive part 22, the support 3 may be arranged opposite to the post terminal 12. That is, the support 3 and the post terminal 12 are located on the same side of the active substance-coated part 21, and the support 3 may be arranged between the post terminal 12 and the active substance-coated part 21. When the support 3 is arranged on the side of the active substance-coated part 21 without the conductive part 22, the support 3 is not arranged opposite to the post terminal 12. For example, the support 3 and the post terminal 12 are located on two adjacent sides of the active substance-coated part 21. For another example, the support 3 and the post terminal 12 are located on two opposite sides of the active substance-coated part 21.

It should be noted that in the embodiments of the present application, the support 3 in the embodiments of the present application may be added to the original structure of a battery cell in the related art without changing the other structures of the battery cell in the related art (such as a top cover, an upper plastic body, and a lower plastic body); or an independent support 3 may be used to replace a lower plastic member embedded under the top cover of a battery cell in the related art.

In the technical solution of the embodiment of the present application, by arranging the support 3 at the end of the active substance-coated part 21 distal to the opening 1110 and arranging the projection of the body part 36 on the plane of the housing cover 112 within the projection of the active substance-coated part 21 on the plane of the housing cover 112 before they are housed together, in the process of loading the battery cell assembly 2 with the support 3 into the housing 11, the support 3 will first contact the housing body 111, thereby preventing, to some extent, the end of the housing body 111 proximal to the opening 1110 from directly contacting the active substance-coated part 21 and reducing the probability of the housing 11 scratching the active substance-coated part 21. By arranging the projection of the extending part 37 on the plane of the housing cover 112 outside the projection of the active substance-coated part 21 on the plane of the housing cover 112, the active substance-coated part 21 can be protected in the housing process, thus reducing the probability that the active substance-coated part 21 contacts the housing 11 and further reducing the probability of the housing 11 scratching the active substance-coated part 21. In addition, the arrangement of the support 3 may also reduce the probability of the housing 11 scratching the active substance-coated part 21 to decrease the fall-off probability of the active substance. This, to some extent, prevents internal short circuits due to the connection of the fallen active substance and the opposite electrode plate, and also, to some extent, prevents the chemical reaction between the fallen active substance and the housing 11, which may cause the corrosion and rupture of the housing 11 and further improve the reliability of the battery cell 10.

In some embodiments, the extending parts 37 are located on two opposite sides of the body part 36 in a preset direction parallel to the plane of the housing cover 112. Illustratively, referring to FIG. 4, the cross-sectional shape of the battery cell 10 may be a rectangle, the height direction of the battery cell 10 is a first direction Z, and the length direction of the battery cell 10 is a second direction X. The housing cover 112 is arranged at one end in the height direction of the housing 11, and the extending parts 37 are located on two opposite sides of the body part 36 in the second direction. Certainly, the cross-sectional shape of the battery cell 10 is not limited to rectangles, but may also be a circle, etc., which is not limited herein.

In the above technical solution, the arrangement of the extending parts 37 on two opposite sides of the body part 36 in the preset direction can prevent the edges of two opposite sides of the active substance-coated part 21 from contacting the housing 11, thereby preventing the housing 11 from scratching the edges of the two opposite sides of the active substance-coated part 21.

In some embodiments, the extending part 37 is an annular structure surrounding the body part 36. In other words, the edges of the projection of the support 3 on the plane of the housing cover 112 all exceed the projection of the active substance-coated part 21 on the plane of the housing cover 112. By such a configuration, the support 3 can protect the outer edge of one end of the active substance-coated part 21 and prevent the outer edge on the side of the active substance-coated part 21 proximal to the support 3 from contacting the housing 11, thereby preventing the housing 11 from scratching the active substance-coated part 21 and further improving the reliability of the battery cell 10.

Referring to FIG. 5 again and further referring to FIG. 6, FIG. 6 is an enlarged view of the battery cell 10 shown in FIG. 5 at portion A. The edge of the support 3 distal to the housing cover 112 is provided with a guiding surface 35. That is, the peripheral region of the surface of the support 3 on the side distal to the housing cover 112. Specifically in FIG. 6, the edge of the support 3 distal to the housing cover 112 includes at least the connection position between the side of extending part 37 distal to the body part 36 and the side distal to the housing cover 112.

Illustratively, the guiding surface 35 may include an inclined surface. Specifically, a chamfer may be arranged on the edge on the side of the support 3 distal to the battery cell assembly 2. As used herein, the "chamfer" means that a corner of the support 3 is processed into an inclined surface by cutting or other processes to facilitate the loading of the support 3 into the housing 11. Illustratively, the guiding surface 35 may include an arc-shaped surface. The arc-shaped surface may also play an automatic guiding role when the support 3 is loaded into the housing 11. Illustratively, the guiding surface 35 may include an arc-shaped surface and an inclined surface. Certainly, the guiding surface 35 may also have a surface of other special-shapes, which is not limited herein.

In the process of loading the battery cell assembly 2 with the support 3 into the housing 11, the guiding surface 35 can play a guiding role, such that the support 3 can be smoothly loaded into the housing body 111, thereby improving the assembly efficiency.

According to some embodiments of the present application, the support 3 is in snap-fit with or bonded to the battery cell assembly 2.

Specifically, in the embodiment where the support 3 is in snap-fit with the battery cell assembly 2, a mounting groove may be arranged on the support 3, and the end of the active substance-coated part 21 distal to the opening 1110 fits the mounting groove, thereby achieving the snap-fit between the end of the active substance-coated part 21 distal to the opening 1110 and the support 3. The connection structure is simple and easy to operate. Certainly, the snap-fit between the support 3 and the battery cell assembly 2 is not limited to the above structure. In the embodiment where the support 3 is bonded to the battery cell assembly 2, an adhesive may be applied between the end of the active substance-coated part 21 distal to the opening 1110 and the support 3, or may be applied between the side wall of the active substance-coated part 21 and the support 3, thereby achieving the bonding of the active substance-coated part 21 distal to the opening 1110 to the support 3. Certainly, the application position of the adhesive is not limited to the above position.

It should be noted that the connection manner between the support 3 and the battery cell assembly 2 is not limited to the above structure, and may be selected according to actual conditions. The connection of the support 3 to the battery cell assembly 2 may, to some extent, prevent the support 3 from falling off before housing, thereby increasing the yield of the battery cell 10. Housing the support 3 and the battery cell assembly 2 together may also protect the battery cell assembly 2 and ensure the smooth and safe housing of the battery cell assembly 2, while providing insulation.

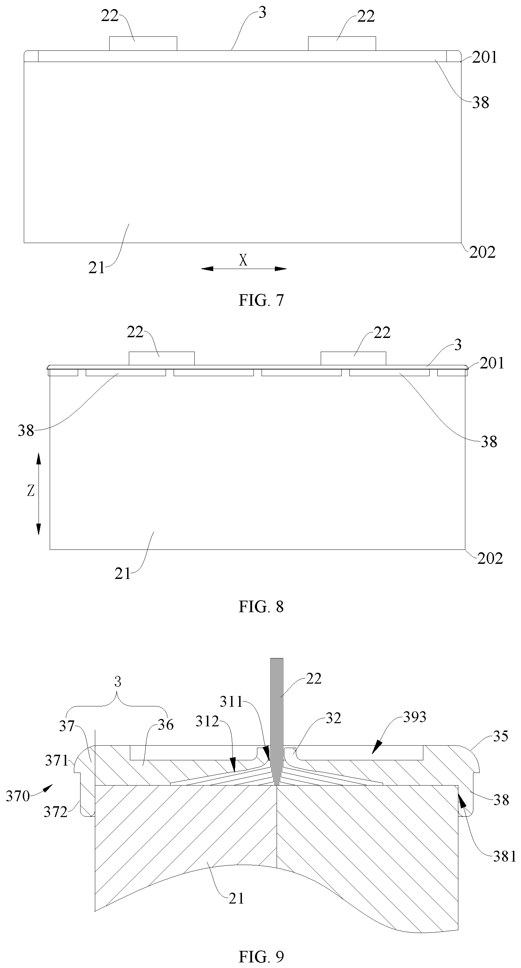

Referring to FIGs. 7 and 8, FIG. 7 is a front view of a battery cell 10 according to some embodiments of the present application. FIG. 8 is a front view of a battery cell 10 according to some other embodiments of the present application. A limiting protruding part 35 is arranged on one side of the support 3 and in snap-fit with the active substance-coated part 21.

Illustratively, the limiting protruding part 35 may be arranged on the extending part 37 and may be arranged on the side of the extending part 37 proximal to the housing cover 112. That is, the surface of the extending part 37 proximal to the housing cover 112 protrudes toward the housing cover 112 and then forms the limiting protruding part 35. The limiting protruding part 35 may also be arranged on the side of the extending part 37 distal to the body part 36. That is, one end of the limiting protruding part 35 is connected to the side of the extending part 37 distal to the body part 36, and the other end of the limiting protruding part 35 extends in a direction toward the housing cover 112 and exceeds the end surface of the body part 36 proximal to the housing cover 112.

Illustratively, the limiting protruding part 35 may be arranged on the body part 36 and may be arranged on the side of the body part 36 proximal to the housing cover 112. That is, the surface of the extending part 36 proximal to the housing cover 112 protrudes toward the housing cover 112 and then forms the limiting protruding part 35.

For ease of understanding, the active substance-coated part 21 can be defined as being provided with a first end 201 and a second end 202 arranged opposite to each other, and the limiting protruding part 38 stops the active substance-coated part 21 at the outer side of the side wall proximal to the first end 201. In the process of loading the battery cell assembly 2 with the support 3 into the housing 11, the first end 201 of the active substance-coated part 21 with the support 3 first enters the housing 11. As the assembly process proceeds, the first end 201 of the active substance-coated part 21 gradually moves away from the opening 1110 in the housing 11. In the assembly process, the limiting protruding part 38 is located between the side wall of the active substance-coated part 21 and the housing 11. After the battery cell assembly 2 and the support 3 are mounted in place in the housing 11, the support 3 is located between the wall of the housing 11 opposite to the opening 1110 thereof and the first end 201 of the active substance-coated part 21.

With such a configuration, the limiting protruding part 38 can restrain one end of the active substance-coated part 21, reduce the fluffing probability of the outer layer of the active substance-coated part 21, protect the end of the active substance-coated part 21, and prevent the end of the active substance-coated part 21 from contacting the housing 11, thereby preventing the housing 11 from scratching the active substance-coated part 21. Also, the snap-fit of the support 3 with the active substance-coated part 21 via the limiting protruding part 38 can, to some extent, prevent the support 3 from falling off before housing, thereby increasing the yield of the battery cell 10.

Referring to FIG. 7 again, the limiting protruding part 38 is formed as an annular protruding part extending in the circumferential direction of the battery cell assembly 2.

In other words, the limiting protruding part 38 may be of an integrated structure and the outer side of the battery cell assembly 2 is sheathed with the limiting protruding part 38. In this way, the limiting protruding part 38 can constrain the battery cell assembly 2 in the circumferential direction of the battery cell assembly 2, which can more effectively reduce the fluffing probability of the outer layer of the battery cell assembly 2, protect the end of the battery cell assembly 2, and alleviate the contact problem of the end of the battery cell assembly 2 with the housing 11, thereby alleviating the problem of the housing 11 scratching the battery cell assembly 2.

Referring to FIG. 8 again, a plurality of limiting protruding parts 38 may be present, and arranged in the circumferential direction of the battery cell assembly 2 and spaced apart from each other, and there is a gap between two adjacent limiting protruding parts 38. By such an arrangement, on the basis of restraining and protecting the battery cell assembly 2, the limiting protruding part 38 can save the materials, reduce the costs, and facilitate the assembly of the support 3 and the battery cell assembly 2.

Certainly, the arrangement manner of the plurality of limiting protruding parts 38 is not limited to the above condition, and can be specifically selected according to actual needs. The limiting protruding part 38 is in fit with the side wall of the battery cell assembly 2; or, there is a gap between the limiting protruding part 38 and the side wall of the battery cell assembly 2. In other words, the limiting protruding part 38 may or may not be in contact with the side wall of the battery cell assembly 2. The limiting protruding part 38 stops the side wall of the battery cell assembly 2 to reduce the fluffing probability of the outer layer of the battery cell assembly 2, protect the side wall of the battery cell assembly 2, and alleviate the contact problem of the end of the battery cell assembly 2 with the housing 11.

Referring to FIG. 9, FIG. 9 is a partial cross-sectional view of a battery cell 10 according to some embodiments of the present application. The surface of the limiting protruding part 38 on the side facing the active substance-coated part 21 may include a first surface 381, and the first surface 381 is in fit with a side wall of the active substance-coated part 21. The first surface 381 can constrain the battery cell assembly 2 to reduce the fluffing probability of the outer layer of the active substance-coated part 21, protect the side wall of the active substance-coated part 21, and alleviate the contact problem of one end of the active substance-coated part 21 with the housing 11.

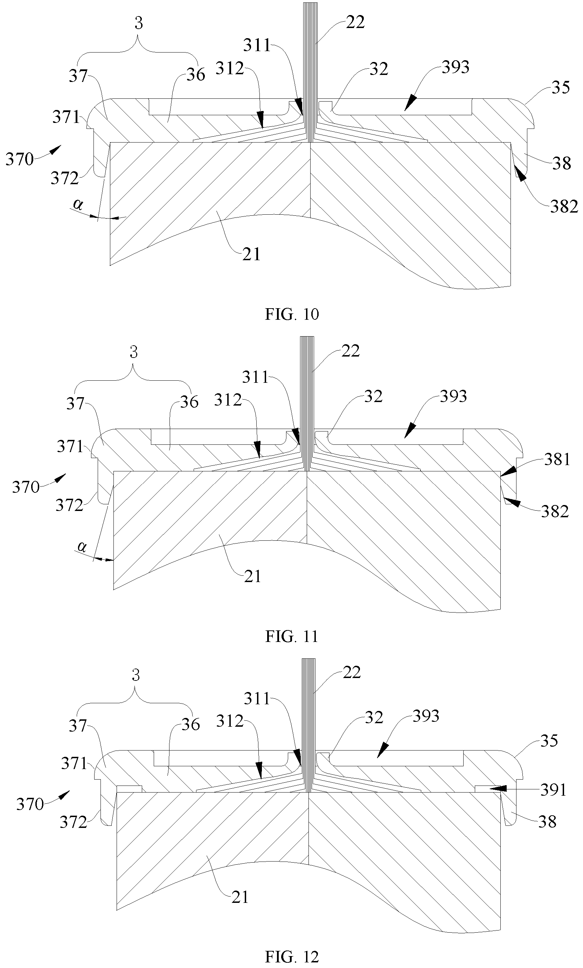

Referring to FIG. 10, FIG. 10 is a partial cross-sectional view of a battery cell 10 according to some other embodiments of the present application. The surface of the limiting protruding part 38 on the side proximal to the active substance-coated part 21 may include a second surface 382, and the distance between the second surface 382 and the active substance-coated part 21 gradually increases in the direction from the support 3 toward the opening 1110. That is, the second surface 382 extends obliquely in a direction away from a root portion of the limiting protruding part 38 and the side wall of the active substance-coated part 21. For example, the second surface 382 may be an inclined surface or an arc-shaped surface.

By such an arrangement, the second surface 382 can stop the side wall of the active substance-coated part 21 to reduce the fluffing probability of the outer layer of the active substance-coated part 21 and protect the side wall of the active substance-coated part 21. In addition, the second surface 382 can play a guiding role in facilitating the assembly and improving the assembly efficiency of the battery cell assembly 2 and the support 3. Referring to FIG. 11, FIG. 11 is a partial cross-sectional view of a battery cell 10 according to yet some other embodiments of the present application.

Referring to FIG. 11, FIG. 11 is a partial cross-sectional view of a battery cell 10 according to yet some other embodiments of the present application. The surface of the limiting protruding part 38 on the side facing the active substance-coated part 21 may include the first surface 381 and the second surface 382. The first surface 381 is in fit with the side wall of the active substance-coated part 21. The distance between the second surface 382 and the active substance-coated part 21 gradually increases in the direction from the support 3 toward the opening 1110. The first surface 381 is located between the root portion of the limiting protruding part 38 and the second surface 382.

Specifically, the profile of the first surface 381 may be a straight line extending vertically in the height direction of the support 3, and a contour line of the second surface 382 can be an inclined line obliquely arranged in the height direction of the support 3. Such an arrangement can provide good restraining effects on the active substance-coated part 21 and effectively reduce the fluffing probability of the outer layer of the active substance-coated part 21, while facilitating the assembly and improving the assembly efficiency of the battery cell assembly 2 and the support 3.

Referring to FIG. 12, FIG. 12 is a partial cross-sectional view of a battery cell according to still some other embodiments of the present application. The side of the support 3 facing the battery cell assembly 2 is provided with a clearance part 391 configured to provide clearance for the outer edge on the side of the battery cell assembly 2 facing the support 3, thereby reducing the risk of the support 3 crushing the battery cell assembly 2.

Specifically, in the embodiment where the support 3 is provided with the limiting protruding part 38, when the support 3 is formed, a rounded corner structure may be formed in the root portion on one side of the limiting protruding part 38 proximal to the center of the support 3. By providing the clearance part 391, the rounded corner structure between the limiting protruding part 38 and the body part 36 can be removed to prevent the rounded corner structure from crushing the outer edge of the battery cell assembly 2. The clearance part 391 may be a groove open toward the battery cell assembly 2. For example, the groove may be an annular groove. For another example, the groove may include a plurality of grooves spaced apart from each other. The shape of the groove may be selected according to actual conditions. For another example, the clearance part 391 may also be an inclined clearance surface or an arc-shaped clearance surface for providing clearance for the battery cell assembly 2. In other embodiments of the present application, the side of the support 3 proximal to the battery cell assembly 2 may also be in complete contact with the battery cell assembly 2. That is, no clearance structure is arranged on the side of the support 3 facing the battery cell assembly 2.

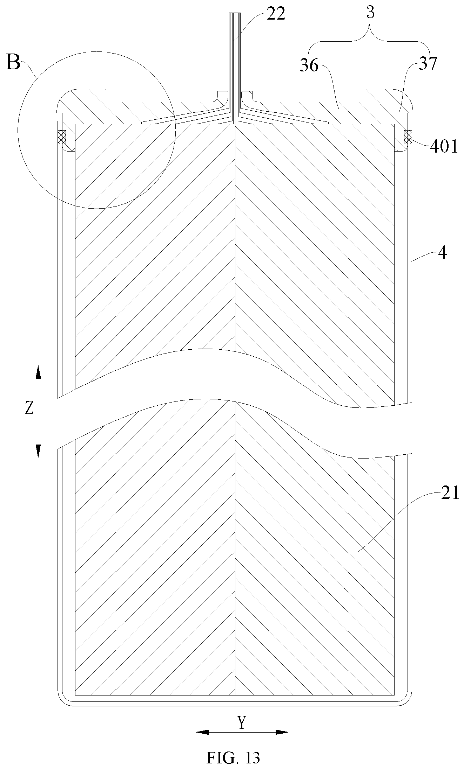

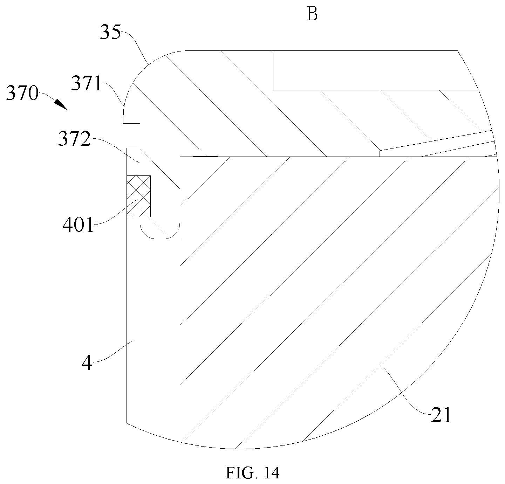

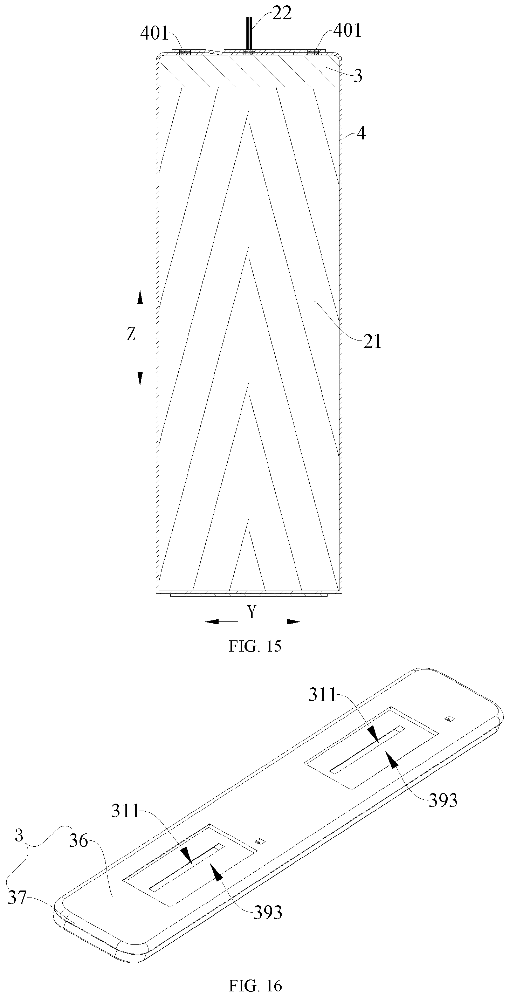

Referring to FIGs. 13-15, FIG. 13 is a cross-sectional view of a battery cell 10 where a battery cell assembly 2 is assembled with a support 3 and an insulating member 4 according to some embodiments of the present application. FIG. 14 is an enlarged view of the battery cell 10 shown in FIG. 13 at portion B. FIG. 15 is a cross-sectional view of a battery cell 10 where a battery cell assembly 2 is assembled with a support 3 and an insulating member 4 according to some other embodiments of the present application. The battery cell 10 may further include an insulating member 4 wrapped around the active substance-coated part 21 and connected to the extending part 37. The insulating member 4 and the support 3 may be in bonding connection or hot-melting connection. Certainly, the insulating member 4 and the support 3 may also be in other connection manners.

When the battery cell assembly 2 with the support 3 is mounted in place in the housing 11, the insulating member 4 located between the active substance-coated part 21 and the housing 11 may provide an insulating effect, protect the battery cell assembly 2, and prevent the battery cell assembly 2 from connection to the housing 11 of the battery cell 10, effectively reducing the corrosion due to the exposure of the battery cell assembly 2. The insulating member 4 is connected to the extending part 37 to help secure the insulating member 4.

Referring to FIGs. 13 and 14 again, the insulating member 4 is connected to a circumferential wall surface 370 of the extending part 37. The "circumferential wall surface 370 of the extending part 37" refers to the outer wall surface of the extending part 37 extending in the height direction thereof (the up-down direction in the drawings). Illustratively, if the support 3 is a rectangular plate member, the circumferential wall surface 370 of the support 3 includes four side wall surfaces, each side wall surface is parallel to the height direction of the support 3 (the up-down direction in the drawings); if the support 3 is cylindrical, the circumferential wall surface 370 of the support 3 is a cylindrical surface. Certainly, the support 3 may also be of an irregular structure.

Specifically, in the embodiment where the insulating member 4 and the support 3 are in hot-melting connection, the insulating member 4 and the circumferential wall surface 370 of the support 3 are in hot-melting connection to form a connection mark 401. The connection mark 401 may be an annular structure extending in the circumferential direction of the support 3 or may include a plurality of connection structures arranged in the circumferential direction of the support 3 and spaced apart.

More specifically, in the embodiment where the battery cell assembly 2 is cuboid, the support 3 may be a rectangular plate member of a corresponding shape, the insulating member 4 is wrapped around the four side walls of the battery cell assembly 2, and the insulating member 4 is in hot-melting connection to the four side wall surfaces of the support 3. The insulating member 4 is in hot-melting connection to each side wall surface of the support 3 to form a connection mark 401, thereby improving the connection reliability between the insulating member 4 and the support 3.

In the above technical solution, the connection of the insulating member 4 to the circumferential wall surface 370 of the support 3 can improve the connection reliability between the insulating member 4 and the support 3, thus reducing the fall-off risk of the insulating member 4.

Referring to FIGs. 9-12 again, the circumferential wall surface 370 is provided with a first step surface 371 and a second step surface 372; the second step surface 372 is located on the side of the first step surface 371 proximal to the housing cover 112, and the second step surface 372 is closer to the active substance-coated part 21 than the first step surface 371 is; the insulating member 4 is connected to the second step surface 372.

In the above technical solution, configuring the circumferential wall surface 370 to include the first step surface 371 and the second step surface 372 can provide a mounting space for the insulating member 4. Connecting the insulating member 4 to the second step surface 372 can reduce the fall-off risk of the connection structure between the insulating member 4 and the second step surface 372 due to scratching the housing 11 and further improve the connection reliability between the insulating member 4 and the support 3.

In some embodiments, the first step surface 371 is farther from the active substance-coated part 21 than an outer side surface of the insulating member 4 is. In other words, the first step surface 371 exceeds the connection position between the support 3 and the insulating member 4. In the process of loading the battery cell assembly 2 with the support 3 into the housing 11, the support 3 first enters the housing body 111 through the opening 1110, and then the active substance-coated part 21 wrapped in the insulating member 4 enters the housing body 111 through the opening 1110.

Since the first step surface 371 is farther from the active substance-coated part 21 than the outer side surface of the insulating member 4 is, in the housing process, the first step surface 371 can protect the edge of the insulating member 4 and the edge of the active substance-coated part 21, prevent the edge of the insulating member 4 and the edge of the active substance-coated part 21 from scratching the inner wall of the housing 11, protect the connection position between the insulating member 4 and the second step surface 372, reduce the fall-off risk of the connection structure between the insulating member 4 and the second step surface 372 due to scratching the housing 11, and further improve the connection reliability between the insulating member 4 and the support 3.

Referring to FIG. 15 again, the battery cell 10 further includes an insulating member 4 wrapped around the active substance-coated part 21 and connected to the surface of the body part 36 distal to the housing cover 112.

Connecting at least a part of the insulating member 4 to the wall surface of the body part 36 distal to the battery cell assembly 2 can, when loading the battery cell assembly 2 with the support 3 into the housing 11, prevent the housing 11 from scratching the edge of the insulating member 4 or the connection position between the insulating member 4 and the body part 36, prevent the connection position of the two from being pulled apart in a housing process, reduce the movement and slippage of the insulating member 4 in housing the battery cell assembly 2, and improve the connection reliability between the insulating member 4 and the support 3, reducing the fall-off risk of the insulating member 4, the corrosion risk of the housing 11 due to the exposure of the battery cell assembly 2, the failure risk of the battery cell assembly 2 and the risk of electrolyte leakage, and thus improving the reliability and stability of the battery cell 10. In addition, connecting at least a part of the insulating member 4 to the wall surface of the body part 36 distal to the battery cell assembly 2 can provide the insulating member 4 with a design with greater dimensions, applicability to battery cell assemblies 2 of different sizes, higher compatibility, and improved manufacturability. Moreover, after the support 3 and the battery cell assembly 2 are mounted in place in the housing 11, the insulating member 4 is pressed between a wall surface of the housing 11 opposite to an opening 1110 and the body part 36, which can further reduce the fall-off risk of the insulating member 4, the failure risk of the battery cell assembly 2 due to exposure and the corrosion risk of the housing 11, thereby improving the reliability and stability of the battery cell 10.

According to some optional embodiments of the present application, the insulating member 4 and the circumference of the wall surface of the body part 36 distal to the battery cell assembly 2 are in an annular continuous connection. The annular connection herein refers to that the connection position of the insulating member 4 and the body part 36 extends in the circumferential direction of the body part 36 to form a closed ring shape.

Such a configuration may increase the connection area between the insulating member 4 and the support 3, so as to improve the connection reliability and stability between the insulating member 4 and the support 3 in the circumferential direction of the support 3 and further reduce the fall-off risk of the insulating member 4, thereby improving the reliability for housing the battery cell assembly 2 and ensuring the reliability and stability of the battery cell 10.

In the embodiments of the present application, the insulating member 4 and the circumference of the wall surface of the support 3 distal to the battery cell assembly 2 are in an annular spaced connection. That is, there are a plurality of connection positions between the insulating member 4 and the support 3, and the plurality of connection positions are arranged in the circumferential direction of the support 3 and spaced apart from each other. On the basis of ensuring the reliability and stability of the connection between the insulating member 4 and the support 3 in the circumferential direction of the support 3, the configuration may also save connection materials, reduce material costs, simplify the connection procedures, and improve the production efficiency.

Certainly, in other embodiments of the present application, the insulating member 4 and the wall surface of the support 3 distal to the battery cell assembly 2 may also be in an annular continuous connection in the circumferential direction. The annular connection herein refers to that the connection position of the insulating member 4 and the support 3 extends in the circumferential direction of the support 3 to form a closed ring shape. Such a configuration may increase the connection area between the insulating member 4 and the support 3, so as to improve the connection reliability and stability between the insulating member 4 and the support 3 in the circumferential direction of the support 3 and further reduce the fall-off risk of the insulating member 4, thereby improving the reliability for housing the battery cell assembly 2 and ensuring the reliability and stability of the battery cell 10.

In addition, in other embodiments of the present application, the connection positions of the insulating member 4 and the support 3 can be concentrated on two opposite sides, two adjacent sides, or a plurality of sides of the support 3, which can be selected according to the actual shapes of the battery cell assembly 2 and the support 3 and are not limited here.

Referring to FIG. 15 again, in the embodiments of the present application, the connection manner between the insulating member 4 and the support 3 may be a hot-melting connection, and the insulating member 4 and the wall surface of the support 3 distal to the battery cell assembly 2 are in a hot-melting connection to form a connection mark 401. The position of the connection mark 401 is not limited in space. Compared with the related art, the area of the connection mark 401 can be designed to be greater, so as to make the connection firmer and reduce the fall-off risk of the insulating member 4.

Specifically, in the embodiments of the present application, when a plurality of connection marks 401 are present, and the plurality of connection marks 401 are arranged in the circumferential direction of the wall surface of the support 3 distal to the battery cell assembly 2 and spaced apart from each other. In other embodiments of the present application, the connection mark 401 may also extend annularly in the circumferential direction of the wall surface of the support 3 distal to the battery cell assembly 2 to make the connection between the insulating member 4 and the support 3 firmer, thereby adequately improving the connection reliability between the insulating member 4 and the support 3 and reducing the fall-off risk of the insulating member 4.

It should be noted that in the embodiments of the present application, the shape of the connection mark 401 may be rectangular, circular, oval, etc., or may be irregular. The arrangement of the plurality of connection marks 401 can be selected according to the actual shapes of the battery cell assembly 2 and the support 3. For example, when the cross-sectional shapes of the battery cell assembly 2 and the support 3 are square or rectangular, the plurality of connection marks 401 may be distributed near four sides of the support 3, or may be concentrated on opposite sides of the support 3. For another example, when the cross-sectional shapes of the battery cell assembly 2 and the support 3 are circular, the plurality of connection marks 401 may be evenly distributed along the circumference of the wall surface of the support 3 distal to the battery cell assembly 2.

Certainly, the distribution form of the plurality of connection marks 401 is not limited to those above, and the distance between two adjacent connection marks 401 can be adjusted as needed. The number of the connection mark 401 can be appropriately increased to save materials and reduce the costs while ensuring the connection reliability between the insulating member 4 and the support 3.

Taking a cuboid battery cell assembly 2 as an example, in the embodiments of the present application, the support 3 may be a rectangular plate member of a corresponding shape, the support 3 is arranged on a wall surface of the battery cell assembly 2, and the insulating member 4 is wrapped around the other five wall surfaces on the circumference of the battery cell assembly 2 to ensure the insulation effect between the battery cell assembly 2 and the housing 11. Also, the connection mark 401 formed by the insulating member 4 and the wall surface of the support 3 distal to the battery cell assembly 2 may be arranged adjacent to the circumference of the support 3, and may be adjacent to two sides, three sides, or four sides along the circumference of the support 3. The number of the connection marks 401 formed by connecting the insulating member 4 and positions near the corresponding sides may be increased or decreased according to the size of the corresponding sides, which is not limited in the embodiments of the present application.

In the above technical solution, the use of the hot-melting connection may facilitate the fit of the insulating member 4 and the support 3 and improve the assembly efficiency, thus ensuring the housing efficiency of the battery cell assembly 2 and saving assembly and manufacturing costs. Also, both the annular circumferential extension and the spaced circumferential arrangement of the connection mark 401 can improve firmness of the connection between the insulating member 4 and the support 3 and improve the reliability and stability of the connection of the insulating member 4 and the support 3, so as to adequately reduce the fall-off risk of the insulating member 4. In addition, compared with the annular circumferential extension, the spaced circumferential arrangement can also save materials and reduce the costs while ensuring the reliability of the connection of the insulating member 4 and the support 3.

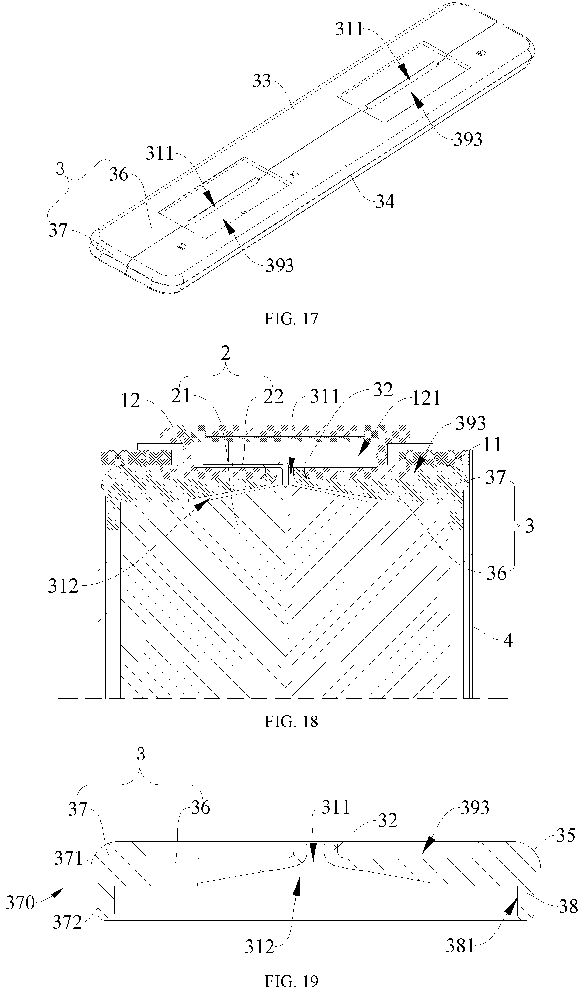

Referring to FIG. 13 again, and further referring to FIGs. 16 and 17, FIG. 16 is a structural schematic view of a support 3 of a battery cell 10 according to some embodiments of the present application. FIG. 17 is a structural schematic view of a support 3 of a battery cell 10 according to some other embodiments of the present application. In order to facilitate the connection of the conductive part 22 to the post terminal 12 from the side of the active substance-coated part 21 proximal to the support 3, in the embodiments of the present application, the conductive part 22 is connected to the side of the active substance-coated part 21 proximal to the body part 36; the body part 36 is provided with a via hole 311, and the conductive part 22 passes through the via hole 311 to be connected to the post terminal 12.

The shape of the via hole 311 can be selected according to the shape of the conductive part 22. For example, when the cross-sectional shape of the conductive part 22 that extends into the via hole 311 is elongated, the shape of the via hole 311 may be selected from regular shapes, such as square, rectangular, elliptical, or oblong, or may be an irregular shape. For another example, when the cross-sectional shape of the conductive part 22 that extends into the via hole 311 is a circle, the shape of the via hole 311 may be selected from circular, square, or oblong.

It will be appreciated that the outer surface of the conductive part 22 may be in direct contact with the wall of the via hole 311, or there may be a gap between the outer surface of the conductive part 22 and the wall of the via hole 311, as long as the conductive part 22 can pass through the via hole 311 without damaging the conductive part 22.

In the above technical solution, the arrangement of the via hole 311 in the body part 36 allows the support 3 to gather and accommodate the conductive part 22, thus facilitating the connection of the conductive part 22 to the post terminal 12 and improving the assembly reliability and convenience of the battery cell 10. Also, the support 3 gathers the conductive part 22, which can reduce the number of plastic members in the battery cell 10, achieve the insulation between the entire active substance-coated part 21 and the housing 11 through the fit of the support 3 and the insulating member 4, and effectively reduce the manufacture and production costs.

Certainly, the conductive part 22 may also be provided on one side of the support 3, and the conductive part 22 does not fit the support 3.

In some embodiments of the present application, the support 3 may be of an integrated structure or a split-type structure. Referring to FIG. 16, when the support 3 is of an integrated structure, the via hole 311 is formed in the form of a through hole through the support 3. The integrated structure of the support 3 may provide ease to process and good reliability and facilitate the assembly of the support 3 with the housing assembly 1, thereby improving the assembly efficiency and fitting stability. It will be appreciated that how to process the support 3 can be specifically selected according to the material of the support 3. For example, when the support 3 is an insulating plastic member, the support 3 of an integrated structure may be obtained by injection molding.

Referring to FIG. 17, when the support 3 is of a split-type structure, the support 3 may include a first support 33 and a second support 34 that are separately formed, and the first support 33 and the second support 34 define the via hole 311 therebetween.

In the embodiments of the present application, the first support 33 and the second support 34 are both of an elongated plate-shaped structure, and can be detachably connected. For example, the two may be in plug-in fit or snap-fit to facilitate the assembly. At the same time, the side of the first support 33 proximal to the second support 34 is provided with a semi-hole structure, and the side of the second support 34 proximal to the first support 33 is also provided with another semi-hole structure of an adaptive shape. The semi-hole structure of the first support 33 and the semi-hole structure of the second support 34 together define the ring-shaped via hole 311. That is, the first support 33 and the second support 34 define the via hole 311 therebetween.

In the above technical solution, the first support 33 and the second support 34 fitting and defining the via hole 311 therebetween, when the support 3 is assembled with the battery cell assembly 2, does not require passing the conductive part 22 through the via hole 311 from one end to the other, but clamps the conductive part 22 by assembling the first support 33 and the second support 34 at the position of the conductive part 22, such that the via hole 311 surrounds the conductive part 22, which facilitates the assembly of the support 3 and the battery cell assembly 2 and improves the assembly efficiency.

As an optional solution, when the cross-section of the via hole 311 is in an elongated shape, the first support 33 and the second support 34 are separately arranged on the two sides of the via hole 311 in the width direction. For example, if the width direction of the via hole 311 is the left-right direction, the first support 33 and the second support 34 are located on the left and right sides of the via hole 311, so as to facilitate the fit of the first support 33, the second support 34, and the conductive part 22.

Referring to FIG. 18, FIG. 18 is a partial cross-sectional view of a battery cell 10 according to some embodiments of the present application. A receiving groove 393 in communication with the via hole 311 is arranged on the side of the body part 36 facing away from the active substance-coated part 21 and is configured to accommodate at least a part of the post terminal 12.

The shape of the receiving groove 393 may match the shape of the post terminal 12. For example, when the cross-sectional shape of the post terminal 12 is elongated, the shape of the receiving groove 393 may be selected from regular shapes, such as square, rectangular, elliptical, or oblong, or may be an irregular shape. For another example, when the cross-sectional shape of the post terminal 12 is a circle, the shape of the receiving groove 393 may be selected from circular, square, or oblong.

It will be appreciated that the outer surface of the post terminal 12 may be in direct contact with the groove side wall of the receiving groove 393, or there may be a gap between the outer surface of the post terminal 12 and the groove side wall of the receiving groove 393, as long as at least a part of the post terminal 12 can be accommodated in the receiving groove 393 without damaging the post terminal 12.

In the above technical solution, accommodating at least a part of the post terminal 12 in the receiving groove 393 makes the structure of the entire battery cell 10 more compact and reliable, which is conducive to improving the energy density of the entire battery 100. Also, the arrangement of the receiving groove 393 enables the insulation of the post terminal 12 from a part of the housing 11 via the support 3, so as to further improve the stability and reliability of the battery cell 10. In addition, receiving the post terminal 12 in the receiving groove 393 may also improve the stability and reliability of the post terminal 12, so as to further improve the stability and reliability of the battery cell.

Referring to FIG. 18 again, a positioning part 32 is arranged on the side of the body part 36 facing away from the active substance-coated part 21; the positioning part 32 is set on the circumferential direction of the via hole 311, and extends in a direction toward the post terminal 12.

In some embodiments, the positioning part 32 may be an annular boss extending in the circumferential direction of the via hole 311. In some other embodiments, the positioning part 32 may include two boss structures arranged opposite to each other and located on two opposite sides of the via hole 311. For example, the via hole 311 may be formed as an elongated hole. The two boss structures may be arranged opposite to each other in the width direction of the elongated hole and both extend in the length direction of the elongated hole.

In the above technical solution, by arranging the positioning part 32, in the process of assembly of the support 3 and the post terminal 12, the fit of the positioning part 32 and the via hole 311 enables the mounting of the support 3 and the post terminal 12 at preset positions, thus helping improve the assembly efficiency of the battery cell 10. When the conductive part 22 penetrates through the via hole 311, the positioning part 32 can restrain, gather, and support the conductive part 22, so as to facilitate the connection of the conductive part 22 to the post terminal 12, thereby improving the assembly efficiency and assembly quality of the battery cell 10.

Referring to FIG. 18 again, an accommodating part 121 is arranged on the post terminal 12; at least a part of the conductive part 22 is accommodated in the accommodating part 121; at least a part of the positioning part 32 extends into the accommodating part 121 to guide the accommodation of the conductive part 22 in the accommodating part 121. In other words, the post terminal 12 is configured into a hollow structure.

In the above technical solution, the configuration of the post terminal 12 into a hollow structure and the fit of the positioning part 32 to the hollow structure can guide the connection of the conductive part 22 to the post terminal 12, thus improving the connection reliability and ensuring the assembly efficiency and quality. In addition, the conductive part 22 can be accommodated in the accommodating part 121, which can improve the assembly efficiency of the conductive part 22, save the space occupied by the conductive part 22, and make full use of the space of the battery cell 10, thus making the fit of the support 3 to the post terminal 12 and the fit of the support 3 to the conductive part 22 closer and more reliable, making the structure of the battery cell 10 more compact, and improving the energy density of the battery cell 10. In addition, the fit of the positioning part 32 and the accommodating part 121 enables the mounting of the support 3 and the post terminal 12 at preset positions, thus helping improve the assembly efficiency of the battery cell 10.

Referring to FIG. 18 again, and further referring to FIG. 19, FIG. 19 is a cross-sectional view of a support 3 of the battery cell 10 according to some embodiments of the present application. A guiding groove 312 in communication with the via hole 311 is formed on the side of the body part 36 facing the active substance-coated part 21 and accommodates at least a part of the conductive part 22; the cross-sectional area of the guiding groove 312 gradually increases in a direction from the body part 36 toward the active substance-coated part 21.

Specifically, a wall of the guiding groove 312 can be an inclined surface or an arc-shaped surface extending in a direction toward the active substance-coated part 21 from the inside to the outside. The "inside" herein refers to a position proximal to the center of the guiding groove 312, and conversely, the "outside" herein refers to a position distal to the center of the guiding groove 312, i.e., a position proximal to the edge of the guiding groove 312.

The guiding groove 312 can accommodate the conductive part 22 and provide clearance for the conductive part 22 to avoid crushing the conductive part 22, reduce the fluffing and folding probabilities in the conductive part 22, and reduce redundancy.

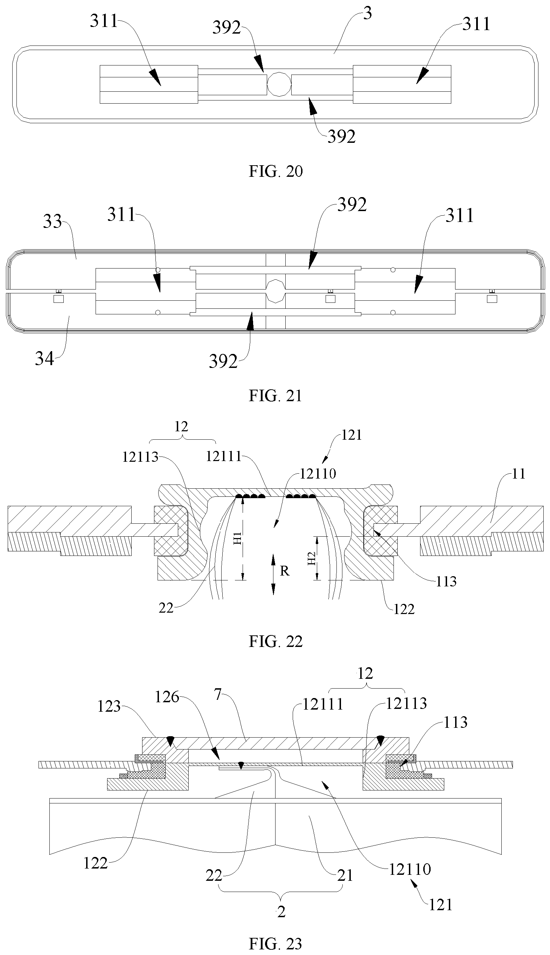

Referring to FIGs. 20 and 21, FIG. 20 is a top view of a support 3 of a battery cell 10 according to some embodiments of the present application. FIG. 21 is a top view of a support 3 of a battery cell 10 according to some other embodiments of the present application. In some embodiments, the support 3 is provided with at least one first liquid injection guide groove 392, and the first liquid injection guide groove 392 is located on the side of the support 3 facing the active substance-coated part 21.

During liquid injection, the electrolyte can flow along the first liquid injection guide groove 392, providing a wetting path for the electrolyte. The first liquid injection guide groove 392 can increase the fluidity of the electrolyte, increase the injection speed, and reduce the formation and standing time. In addition, the arrangement of the first liquid injection guide groove 392 increases the contact area between the electrolyte and the active substance-coated part 21, which can reduce the problem of poor wetting of the active substance-coated part 21.

The at least one first liquid injection guide groove 392 is in communication with the guiding groove 312, and the electrolyte entering the housing 11 can flow along the first liquid injection guide groove 392 toward the guiding groove 312, such that the electrolyte can flow to a predetermined position, thereby further increasing the contact area between the electrolyte and the active substance-coated part 21.

Referring to FIG. 20 again, in the embodiment where the support 3 is of an integrated structure and two post terminals 12 are arranged on the housing 11, the two ends of the first liquid injection guide groove 392 may separately correspond to the positions of the two post terminals 12, and the two ends of the first liquid injection guide groove 392 are separately in communication with the two guiding grooves 312; the electrolyte can flow along the first liquid injection guide groove 392 toward the two guiding grooves 312.

Referring to FIG. 21 again, in the embodiment where the support 3 is of a split-type structure and two post terminals 12 are arranged on the housing 11, the support 3 may include a first support 33 and a second support 34 that are separately formed, and the first support 33 and the second support 34 define the via hole 311 therebetween. At least one first liquid injection guide groove 392 is formed on each of the first support 33 and the second support 34, the two ends of each first liquid injection guide groove 392 may separately correspond to the positions of the two post terminals 12, and the two ends of the first liquid injection guide groove 392 are separately in communication with the two guiding grooves 312; the electrolyte can flow along the first liquid injection guide groove 392 toward the two guiding grooves 312.

In some embodiments, a second liquid injection guide groove (not shown in the drawings) may also be arranged on the support 3 as needed. The second liquid injection guide groove is located on the side of the support 3 facing away from the active substance-coated part 21. By such a configuration, during the injection, the electrolyte can flow along the first liquid injection guide groove 392 and/or the second liquid injection guide groove, providing a wetting path for the electrolyte, increasing the fluidity of the electrolyte and the injection speed, and reducing the formation and standing time.

It should be noted that in the embodiments of the present application, the depth of the first liquid injection guide groove 392 and/or the second liquid injection guide groove is greater than or equal to 0.1 mm. For example, the depth of the first liquid injection guide groove 392 and/or the second liquid injection guide groove can be 0.1 mm, 0.2 mm, 0.5 mm, etc., and can be specifically selected according to actual needs.

Referring to FIG. 17 again, in the embodiments of the present application, the conductive part 22 is connected to the side of the active substance-coated part 21 proximal to the support 3, and the post terminal 12 is provided with an accommodating part 121. At least a part of the conductive part 22 is accommodated in the accommodating part 121 so as to guide the accommodation of the conductive part 22 in the accommodating part 121, thus facilitating the electrical connection fit between the conductive part 22 and the post terminal 12. In other words, the post terminal 12 is configured into a hollow structure.

As used herein, the "at least a part" means that the conductive part 22 may be completely accommodated in the accommodating part 121, or only a part of the conductive part 22 may be accommodated in the accommodating part 121. Since the post terminal 12 is provided with the accommodating part 121, the hollow structure of the accommodating part 121 can reduce the weight of the post terminal 12 to a certain extent, so as to improve the gravimetric energy density of the battery cell 10 and the battery 100. Also, the configuration of the post terminal 12 into a hollow structure and the fit of the positioning part 32 to the hollow structure can guide the connection of the conductive part 22 to the post terminal 12, thus improving the connection reliability and ensuring the assembly efficiency and quality. In addition, the conductive part 22 can be accommodated in the accommodating part 121, which can improve the assembly efficiency of the conductive part 22, save the space occupied by the conductive part 22, and make full use of the space of the battery cell 10, thus making the fit of the support 3 to the post terminal 12 and the fit of the support 3 to the conductive part 22 closer and more reliable, making the structure of the battery cell 10 more compact, and improving the energy density of the battery cell 10.

More specifically, the conductive part 22 is partially or completely accommodated in the accommodating part 121, such that a part of the conductive part 22 located in the accommodating part 121 can occupy the space in the post terminal 12, which can reduce the space occupied by the conductive part 22 in the housing 11. In a given size of the housing 11, some space can be saved in the housing 11 to accommodate an active substance-coated part 21 with a greater size, thereby improving the volumetric energy density of the battery cell 10. For example, when the conductive part 22 is led out from the side of the active substance-coated part 21 proximal to the post terminal 12, the space occupied by the conductive part 22 between the active substance-coated part 21 and the post terminal 12 can be saved, so as to increase the size of the active substance-coated part 21 in the direction in which the conductive part 22 is led out, reduce the distance between the active substance-coated part 21 and the post terminal 12, and improve the energy density of the battery cell 10.

Also, the accommodation of at least a part of the conductive part 22 in the accommodating part 121 can reduce the space occupied by the battery cell 10, so as to accommodate a greater number of battery cells 10 in a battery 100 of a given volume and improve the volumetric energy density of the battery 100. Moreover, the accommodation of at least a part of the conductive part 22 in the accommodating part 121 to occupy the space in the post terminal 12 can reduce the redundancy of the conductive part 22 in the housing 11 to a certain extent, reduce the probability of short circuit between the conductive part 22 and the active substance-coated part 21, and reduce the probability of short circuit of the battery cell 10, thus further improving the working reliability and stability of the battery cell 10 and the battery 100.

It should be noted that in the embodiments of the present application, the accommodating part 121 may be located on the side of the post terminal 12 proximal to the active substance-coated part 21, or may be located on the side of the post terminal 12 distal to the active substance-coated part 21.

Illustratively, referring to FIGs. 22 and 23, FIG. 22 is a partial cross-sectional view of a battery cell 10 according to some embodiments of the present application. FIG. 23 is a partial cross-sectional schematic view of a battery cell 10 according to some embodiments of the present application. When the accommodating part 121 is located on the side of the post terminal 12 proximal to the active substance-coated part 21, the accommodating part 121 includes a first accommodating groove 12110, the surface of the post terminal 12 on the side facing the active substance-coated part 21 is a post terminal inner end surface 122, an opening of the first accommodating groove 12110 is formed on the post terminal inner end surface 122, and at least a part of the conductive part 22 is accommodated in the first accommodating groove 12110.

Illustratively, the first accommodating groove 12110 may be a groove body, which is a groove-shaped structure with a certain depth. For example, when the post terminal 12 is arranged on the upper end wall of the housing 11 and the post terminal inner end surface 122 is the lower surface of the post terminal 12, the first accommodating groove 12110 is formed as an accommodating groove with an opening open downward and a wall recessed upward. For another example, when the post terminal 12 is arranged on the lower end wall of the housing 11 and the post terminal inner end surface 122 is the upper surface of the post terminal 12, the first accommodating groove 12110 is formed as an accommodating groove with an opening open upward and a wall recessed downward.

In the above technical solution, the provision of the first accommodating groove 12110 on the post terminal 12 can reduce the weight of the post terminal 12 to a certain extent, so as to improve the gravimetric energy density of the battery cell 10 and the battery 100. Since the opening of the first accommodating groove 12110 is formed on the post terminal inner end surface 122 and the post terminal inner end surface 122 is the surface of the post terminal 12 on the side proximal to the active substance-coated part 21, the first accommodating groove 12110 may be open toward the active substance-coated part 21, thereby facilitating the conductive part 22 to extend into the first accommodating groove 12110 and improving the assembly efficiency. Moreover, the first accommodating groove 12110 in this type facilitates processing and thus improves production efficiency.

Furthermore, it is easy to process the first accommodating groove 12110 to provide a greater volume, so as to accommodate more conductive parts 22. Also, since the first accommodating groove 12110 is open toward the active substance-coated part 21, the first accommodating groove 12110 may also serve as a buffering and temporary storage structure for the electrolyte, such that more electrolyte can be accommodated in the housing 11. Since the electrolyte will be consumed during the charging and discharging process of the battery cell 10, a greater amount of electrolyte can prolong the service life of the battery cell 10. It is also due to the fact that the first accommodating groove 12110 is open toward the active substance-coated part 21, that the first accommodating groove 12110 may also serve as an accommodating and buffering structure for gas generated inside the battery cell assembly 2, thereby reducing the expansion of the battery cell 10 and improving the reliability and stability of the battery cell 10.

In addition, as the first accommodating groove 12110 is located on the inner side of the post terminal 12, external foreign matters and impurities can hardly enter the first accommodating groove 12110, thereby reducing the impact of external foreign matters and impurities on the battery cell assembly 2, improving the working stability and reliability of the battery cell assembly 2, and further improving the stability and reliability of the battery cell 10 and the battery 100.

Referring to FIG. 22 again, in the embodiments of the present application, the connection manner between the post terminal 12 and the housing 11 is not limited. For example, the connection manner may be welding or riveting. For example, when the two are combined by riveting, the housing 11 is provided with a mounting hole 113, and the post terminal 12 is mounted by riveting at the mounting hole 113. Certainly, it will be appreciated that when the two are fitted by welding or other manners, the housing 11 may also be provided with a mounting hole 113 to allow the mounting of the post terminal 12 on the housing 11 through the mounting hole 113, which is not limited herein.

Also, the first accommodating groove 12110 may be arranged corresponding to the position of the mounting hole 113, or in other words, on the projection plane perpendicular to the axial direction R of the post terminal 12. The orthographic projection of the first accommodating groove 12110 is located within the orthographic projection range of the mounting hole 113, such that the first accommodating groove 12110 can have a greater depth to accommodate more conductive parts 22, thereby reducing the space occupied by the conductive part 22 in the housing 11 to a greater extent.

Specifically, when the mounting hole 113 is arranged on the housing 11 and the post terminal 12 is mounted in the mounting hole 113, in the axial direction R of the post terminal 12, the depth H1 of the first accommodating groove 12110 is greater than or equal to the minimum distance H2 from the post terminal inner end surface 122 to the mounting hole 113.

It should be noted that the specific shape of the first accommodating groove 12110 is not limited, and may be a regular shape or an irregular shape, e.g., a cylindrical groove with a rectangular, elliptical, or track-shaped cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc. Therefore, the depth H1 of the first accommodating groove 12110 refers to: the maximum depth of the first accommodating groove 12110 in the axial direction R of the post terminal 12.

Since the depth H1 of the first accommodating groove 12110 in the axial direction R of the post terminal 12 is greater than or equal to the minimum distance H2 from the post terminal inner end surface 122 to the mounting hole 113, the volume of the post terminal 12 can be fully utilized, such that the first accommodating groove 12110 has a greater depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. Also, due to the greater depth, the first accommodating groove 12110 can accommodate the gas produced by the battery cell assembly 2 to ensure the reliability and stability of the battery cell 10, and can also accommodate more electrolyte to ensure the service life of the battery cell 10.

Referring to FIGs. 22 and 23 again, in order to ensure the stability and reliability of the electrical connection between the active substance-coated part 21 and the post terminal 12, in some embodiments of the present application, the electrical connection position between the conductive part 22 and the post terminal 12 may be located on the wall of the first accommodating groove 12110 formed by the accommodating part 121.

Illustratively, the conductive part 22 and the post terminal 12 may be electrically connected by welding, and the electrical connection position is the welding position of the conductive part 22 and the post terminal 12. Meanwhile, the welding method for the conductive part 22 and the post terminal 12 is not limited, which may be laser welding, for example. Moreover, depending on factors such as the position, angle, or structure of the welding part, vertical welding or inclined welding, and overlap welding or edge sealing welding can be selected. In other embodiments of the present application, the conductive part 22 and the post terminal 12 may be electrically connected by other means instead of welding, such as by providing conductive adhesive or conductive nails. In order to simplify the description, the following description will take an example that the conductive part 22 is welded to the post terminal 12 to form an electrical connection, and that the welding position is the electrical connection position of the conductive part 22 and the post terminal 12.

Specifically, the post terminal 12 specifically includes a first end wall 12111 and a first side wall 12113, the first end wall 12111 is located on the side of the first side wall 12113 distal to the active substance-coated part 21, the first end wall 12111 and the first side wall 12113 define, in an enclosing manner, the first accommodating groove 12110, and the electrical connection position between the conductive part 22 and the post terminal 12 is located on the first end wall 12111 and/or the first side wall 12113. That is, the conductive part 22 may be welded to at least one of the first end wall 12111 and the first side wall 12113.

In the above technical solution, setting the electrical connection position between the conductive part 22 and the post terminal 12 on at least one of the first end wall 12111 and the first side wall 12113 will provide the first accommodating groove 12110 with the functionality of accommodating at least a part of the conductive part 22 and provide the wall of the first accommodating groove 12110 with the functionality of achieving the electrical connection to the conductive part 22, thereby simplifying the structure of the post terminal 12, facilitating the processing of the post terminal 12, simplifying the structure of the conductive part 22, reducing the redundancy of the conductive part 22, and reducing the cost of the conductive part 22. Moreover, utilizing the wall of the first accommodating groove 12110 to achieve the electrical connection to the conductive part 22 may allow a relatively greater area of the electrical connection between the conductive part 22 and the post terminal 12, which not only reduces the difficulty of electrical connection, but also improves the reliability and stability of the electrical connection, thereby improving the performance of the battery cell 10.

In addition, since the electrical connection position of the conductive part 22 and the post terminal 12 is located in the first accommodating groove 12110, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

In addition, in the embodiments of the present application, the first end wall 12111 is configured as a closed structure without any perforation, such that the first accommodating groove 12110 is isolated from the exterior of the housing 11, thereby avoiding the problem of electrolyte leaking in the housing 11 through the first accommodating groove 12110.

Referring to FIGs. 22 and 23 again, in some optional embodiments, the conductive part 22 and the first end wall 12111 match in partial shape, and are arranged in fit and electrically connected, such that the electrical connection position between the conductive part 22 and the first end wall 12111 extends in the length or width direction of the first end wall 12111. For example, when the first end wall 12111 is flat, a part of the conductive part 22 may also be flat and fit the first end wall 12111, and the fitting position is electrically connected, such as welded. As such, the area of the electrical connection can be increased, and the reliability and stability of the electrical connection can be improved.

In addition, when the conductive part 22 is electrically connected to the first end wall 12111 by welding, the location of the first end wall 12111 on the side of the first accommodating groove 12110 distal to the active substance-coated part 21 may facilitate the welding procedures. For example, the welding may be performed from the side of the post terminal 12 distal to the active substance-coated part 21.

It is worth noting that the shape of the first end wall 12111 is not limited, for example, to a flat-plate shape, and an arc-plate shape. When the first end wall 12111 is of a plate structure, the first end wall 12111 is arranged at an included angle with the axial direction R of the post terminal 12. For example, the first end wall may be of a plate structure perpendicular to the axial direction R of the post terminal 12, or may be of an inclined plate structure that is not perpendicular to the axial direction R of the post terminal 12, where, however, the inclination direction is not limited.

Certainly, in other embodiments of the present application, the electrical connection position of the conductive part 22 and the first end wall 12111 may not extend in the length or width direction of the first end wall 12111, and may be, for example, a plurality of discretely arranged spots. For example, the conductive part 22 is provided with a plurality of parts that are spaced apart from each other and separately welded to the first end wall 12111, which will not be described in detail herein.

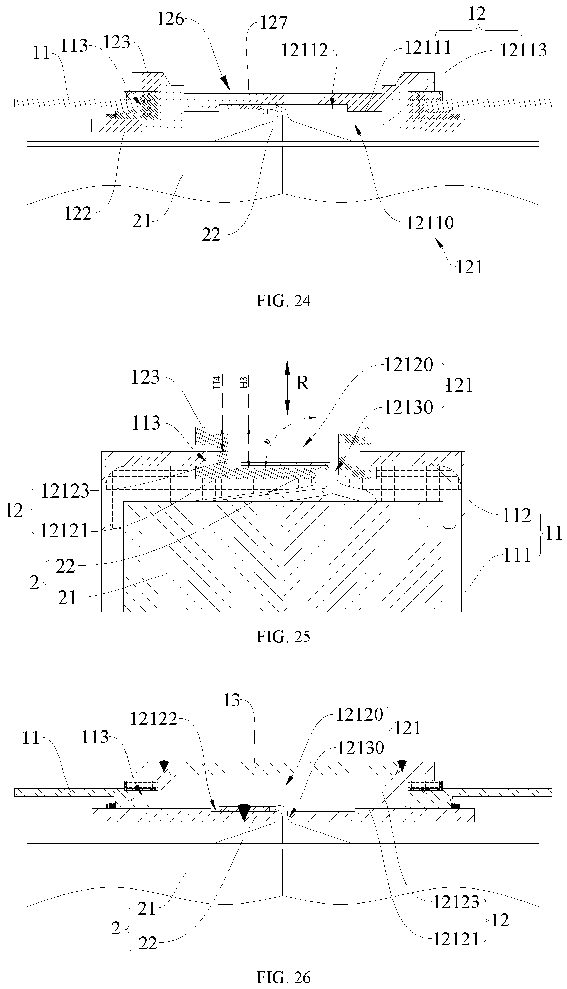

Referring to FIG. 24, FIG. 24 is a partial cross-sectional view of a battery cell 10 according to some embodiments of the present application. When the conductive part 22 is electrically connected to the first end wall 12111, a first recess 12112 may be arranged on the first end wall 12111, and the recess direction of the first recess 12112 is away from the active substance-coated part 21. At least a part of the electrical connection position between the conductive part 22 and the first end wall 12111 is located in the first recess 12112. Illustratively, at least a part of the conductive part 22 may be arranged within the first recess 12112 and connected to a portion of the first end wall 12111 configured to define the first recess 12112.

In the above technical solution, the first recess 12112 can be used to achieve the pre-positioning and limiting of the electrical connection position of the conductive part 22, which is not only conducive to accurately finding the position to achieve the electrical connection and improve the production efficiency, but also conducive to improving the stability and reliability of the conductive part 22 and ensuring the stability and reliability of the battery cell 10 during the charging and discharging processes. Also, by arranging the first recess 12112 on the first end wall 12111, the local wall thickness of the first end wall 12111 can be locally reduced, which is not only conducive to welding, but also conducive to reducing the weight of the post terminal 12 and improving the gravimetric energy density of the battery cell 10.

Referring to FIGs. 23 and 24 again, in the embodiments of the present application, the post terminal 12 may also be provided with a first groove 126 as required, and the first groove 126 is located on the side of the post terminal 12 distal to the active substance-coated part 21. That is, the surface of the post terminal 12 on the side distal to the active substance-coated part 21 is a post terminal outer end surface 123, and an opening of the first groove 126 is formed on the post terminal outer end surface 123.

It will be appreciated that the first groove 126 is a groove body, and the groove body is a groove-shaped structure of a certain depth. Furthermore, when the post terminal 12 is arranged on the upper end wall of the housing 11 and the post terminal outer end surface 123 is the upper surface of the post terminal 12, the first groove 126 is formed as a first groove with the opening upward and the wall recessed downward (that is, recessed in a square toward the battery cell assembly 2). For another example, when the post terminal 12 is arranged on the lower end wall of the housing 11 and the post terminal outer end surface 123 is the lower surface of the post terminal 12, the first groove 126 is formed as a first groove with the opening downward and the wall recessed upward (that is, recessed in a square away from the battery cell assembly 2).

In the above technical solution, since the post terminal 12 is provided with the first groove 126, the weight of the post terminal 12 can be further reduced, such that the gravimetric energy density of the battery cell 10 and the battery 100 can be improved. Also, the first groove 126 is located on the outer side of the post terminal 12, that is, the first groove is open to the side of the post terminal 12 distal to the interior of the housing 11, and the first groove 126 can be used for accommodating or mounting structural components of the battery 100 that electrically connect various battery cells 10, so as to make full use of the space in the post terminal 12, thereby improving the space utilization and volumetric energy density of the battery 100.

In addition, since the post terminal 12 is provided with both the first accommodating groove 12110 and the first groove 126, the first groove 126 is located on the side of the first accommodating groove 12110 distal to the active substance-coated part 21, and the first groove 126 is open in a direction away from the first accommodating groove 12110, the conductive part 22 can be laser-welded to the first end wall 12111 through the first groove 126 from the outside of the post terminal 12, that is, the side of the post terminal 12 distal to the active substance-coated part 21, so as to facilitate the electrical connection between the conductive part 22 and the post terminal 12 through external welding. That is, the above structural arrangement can facilitate external welding of the post terminal 12 to the conductive part 22 through the first groove 126, which facilitates processing and manufacture of the battery cell 10 and can save processing and manufacturing costs.

Furthermore, in order to conveniently and effectively weld the conductive part 22 to the wall of the first accommodating groove 12110 through the first groove 126 and improve the reliability of the welding of the conductive part 22 to the wall of the first accommodating groove 12110, in the embodiments of the present application, the portion between the first groove 126 and the first accommodating groove 12110 can be laser welded to the conductive part 22. That is, the spacer part 127 shown in FIG. 24 can be laser welded to the conductive part 22 to achieve the electrical connection between the battery cell assembly 2 and the post terminal 12. The spacer part 127 of the post terminal 12 located between the first groove 126 and the first accommodating groove 12110 is thin. The spacer part 127 isolates the first groove 126 from the first accommodating groove 12110. The wall surface of the spacer part 127 on the side proximal to the active substance-coated part 21 can be used as the first end wall 12111. When the conductive part 22 needs to be welded to the first end wall 12111, since the spacer part 127 is thin, the welding of the conductive part 22 to the first end wall 12111 can be achieved through the first groove 126, thereby improving the convenience and reliability of welding.

In some embodiments, the first accommodating groove 12110 may be configured into a shape in which the length of the cross-section is greater than the width, such as a rectangle, an ellipse, a track shape, etc. The weld mark formed by welding the conductive part 22 and the post terminal 12 may be an elongated weld mark parallel to the length direction of the first accommodating groove 12110 to improve the welding reliability and increase the current passage performance. Illustratively, when the conductive part 22 is welded to the first end wall 12111 to form a weld mark as an elongated weld mark, the width of the weld mark may be greater than or equal to 6 mm, and the distance between the weld mark and the first side wall 12113 may be greater than or equal to 1 mm, so as to ensure the current passage capacity of the battery cell 10 while ensuring the convenience and reliability of welding.

Referring to FIG. 23 again, the battery cell 10 may further include a groove cover 7. The groove cover 7 is arranged on the post terminal 12 and closes the opening of the first groove 126.

In the above technical solution, by providing the groove cover 7 that closes the first groove 126, the post terminal 12 can be indirectly electrically connected to the busbar component through the groove cover 7. The electrical connection between the groove cover 7 and the busbar component can be more convenient and the electrical connection area can be larger through the arrangement of the position and structure of the groove cover 7. As such, arranging the groove cover 7 can facilitate the electrical connection between adjacent battery cells 10 in the battery 100, and since the electrical connection positions of the battery cells 10 are located at the groove cover 7, which can be separated from the electrical connection position of the conductive part 22 and the post terminal 12 by the first groove 126, there is less interference between the two, which can further improve the stability and reliability of the battery cell 10.

Illustratively, referring to FIG. 25, FIG. 25 is a partial cross-sectional view of a battery cell 10 according to some embodiments of the present application. The accommodating part 121 may also be configured to include a second accommodating groove 12120, the surface of the post terminal 12 on the side distal to the active substance-coated part 21 is a post terminal outer end surface 123, an opening of the second accommodating groove 12120 is formed on the post terminal outer end surface 123, the second accommodating groove 12120 is in communication with the interior of the housing 11 through a perforation 12130, and the conductive part 22 is provided in the perforation 12130 in a penetrating manner and is at least partially accommodated in the second accommodating groove 12120.

It will be appreciated that the second accommodating groove 12120 is a groove body, and the groove body is a groove-shaped structure of a certain depth. For example, when the post terminal 12 is arranged on the upper end wall of the housing 11 and the post terminal outer end surface 123 is the upper surface of the post terminal 12, the second accommodating groove 12120 is formed as an accommodating groove with an opening open upward and a wall recessed downward. For another example, when the post terminal 12 is arranged on the lower end wall of the housing 11 and the post terminal outer end surface 123 is the lower surface of the post terminal 12, the second accommodating groove 12120 is formed as an accommodating groove with an opening open downward and a wall recessed upward.

In the above technical solution, referring to FIG. 25 again, the arrangement of the second accommodating groove 12120 on the post terminal 12 can reduce the weight of the post terminal 12 to a certain extent, so as to improve the gravimetric energy density of the battery cell 10 and the battery 100. Also, since the opening of the second accommodating groove 12120 is formed in the post terminal outer end surface 123, and the post terminal outer end surface 123 is the surface of the post terminal 12 on the side distal to the active substance-coated part 21, the second accommodating groove 12120 can be opened in a direction away from the active substance-coated part 21. In this way, when at least a part of the conductive part 22 is accommodated in the second accommodating groove 12120, the storage or sorting of the conductive part 22 or operations on the electrical connection between the conductive part 22 and the post terminal 12 can be easily achieved through the opening of the second accommodating groove 12120, thereby reducing difficulties in producing the battery cell 10 and improving the manufacture efficiency of the battery cell 10.

In addition, since the second accommodating groove 12120 is in communication with the interior of the housing 11 through the perforation 12130, the second accommodating groove 12120 may also serve as a buffering and temporary storage structure for the electrolyte, such that more electrolyte can be accommodated in the housing 11. Since the electrolyte will be consumed during the charging and discharging process of the battery cell 10, a greater amount of electrolyte can prolong the service life of the battery cell 10. It is also due to the fact that the second accommodating groove 12120 is in communication with the interior of the housing 11 through the perforation 12130, that the second accommodating groove 12120 may also serve as an accommodating and buffering structure for gas generated inside the battery cell assembly 2, thereby reducing the expansion of the battery cell 10 and improving the reliability and stability of the battery cell 10.

It is worth noting that when the accommodating part 121 is provided with the second accommodation groove 12120 and the conductive part 22 is provided in the perforation 12130 in a penetrating manner and is at least partially accommodated in the second accommodating groove 12120, the electrical connection position of the conductive part 22 and the post terminal 12 is not limited.

Illustratively, when the conductive part 22 is provided in the perforation 12130 in a penetrating manner and is at least partially accommodated in the second accommodating groove 12120, in the embodiments of the present application, the electrical connection position of the conductive part 22 and the post terminal 12 is located on a wall of the perforation 12130 formed by the post terminal 12.

In the above technical solution, arranging the electrical connection position between the conductive part 22 and the post terminal 12 on the wall of the perforation 12130 may facilitate the electrical connection operation between the conductive part 22 and the post terminal 12 through the second accommodating groove 12120. The large electrical connection area between the conductive part 22 and the post terminal 12 may help achieve the sealing of the perforation 12130 by using the electrical connection between the conductive part 22 and the post terminal 12, so as to save the sealing costs, alleviate the electrolyte leakage problem, and save sealing members.

Specifically, the conductive part 22 can be welded to the wall of the perforation 12130 at a position where the perforation 12130 is connected to the second accommodating groove 12120 to facilitate the operation. In addition, by controlling the weld mark, the perforation 12130 can be sealed using the weld mark and the conductive part 22, so as to alleviate the problem of electrolyte leaking in the housing 11 through the perforation 12130.

Further illustratively, when the conductive part 22 is provided in the perforation 12130 in a penetrating manner and is at least partially accommodated in the second accommodating groove 12120, in some other embodiments of the present application, the electrical connection position of the conductive part 22 and the post terminal 12 may also be located on a wall of the second accommodating groove 12120 formed by the post terminal 12. As such, the electrical connection operation is facilitated. For example, when the conductive part 22 is welded to the wall of the second accommodating groove 12120 formed on the post terminal 12, the conductive particles generated by welding can be prevented from entering the housing 11, which may otherwise cause short circuit and other problems.

Referring to FIG. 25 again, the post terminal 12 includes a second end wall 12121 and a second side wall 12123, the second end wall 12121 is located on the side of the second side wall 12123 proximal to the active substance-coated part 21, the second end wall 12121 and the second side wall 12123 define, in an enclosing manner, the second accommodating groove 12120, the perforation 12130 is arranged on the second end wall 12121, and the electrical connection position between the conductive part 22 and the post terminal 12 is located on the second end wall 12121 and/or the second side wall 12123.

More specifically, the conductive part 22 and the post terminal 12 may be electrically connected by welding. Therefore, the welding position is the electrical connection position of the conductive part 22 and the post terminal 12. In other embodiments of the present application, the conductive part 22 and the post terminal 12 may be electrically connected by other means instead of welding, such as by providing conductive adhesive or conductive nails, which will not be described in detail herein.

In order to simplify the description, the following description will take an example that the conductive part 22 is welded to the post terminal 12 to form an electrical connection, and that the welding position is the electrical connection position of the conductive part 22 and the post terminal 12. For example, in some embodiments, the electrical connection position of the conductive part 22 and the post terminal 12 is located on the second end wall 12121 and/or the second side wall 12123, and the conductive part 22 may be welded to at least one of the second end wall 12121 and the second side wall 12123.

In the above technical solution, arranging the electrical connection position between the conductive part 22 and the post terminal 12 on at least one of the second end wall 12121 and the second side wall 12123 will provide the second accommodating groove 12120 with the functionality of accommodating at least a part of the conductive part 22 and provide the wall of the second accommodating groove 12120 with the functionality of achieving the electrical connection to the conductive part 22, thereby simplifying the structure of the post terminal 12 and facilitating the processing of the post terminal 12. In addition, forming the perforation 12130 in the second end wall 12121 will facilitate the extension of the conductive part 22 into the second accommodating groove 12120 through the perforation 12130, which may simplify the structure of the conductive part 22, reduce the redundancy of the conductive part 22, and reduce the cost of the conductive part 22. Furthermore, the opening direction of the opening of the second accommodating groove 12120 enables the electrical connection operation on the conductive part 22 and the wall of the second accommodating groove 12120 to be easily performed through the opening of the second accommodating groove 12120, thereby reducing the difficulty of electrical connection. Furthermore, by utilizing the wall of the second accommodating groove 12120 to achieve electrical connection to the conductive part 22, the electrical connection region of the conductive part 22 and the post terminal 12 may be relatively large, thereby improving the reliability and stability of the electrical connection, and further improving the performance of the battery cell 10.

In addition, since the electrical connection position of the conductive part 22 and the post terminal 12 is located in the second accommodating groove 12120, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

Referring to FIGs. 25 again, in some embodiments, the conductive part 22 and the second end wall 12121 match in partial shape, and are arranged in fit and electrically connected, such that the electrical connection position between the conductive part 22 and the second end wall 12121 extends in the length or width direction of the second end wall 12121. For example, when the second end wall 12121 is flat, a part of the conductive part 22 may also be flat and fit the second end wall 12121, and the fitting position is electrically connected, such as welded. As such, the area of the electrical connection can be increased, and the reliability and stability of the electrical connection can be improved.

It is worth noting that the shape of the second end wall 12121 is not limited. For example, the second end wall may be of a flat plate structure or an arc plate structure. When the second end wall 12121 is of a plate structure, the second end wall 12121 is arranged at an included angle with the axial direction R of the post terminal 12. For example, the second end wall may be of a plate structure perpendicular to the axial direction R of the post terminal 12, or may be of an inclined plate structure that is not perpendicular to the axial direction R of the post terminal 12, where, however, the inclination direction is not limited.

For example, referring to FIG. 25 again, when the second end wall 12121 is a plate structure, the included angle θ between the second end wall 12121 and the axial direction R of the post terminal 12 is equal to 90°. That is, in the direction from the perforation 12130 to the second side wall 12123, the second end wall 12121 and the active substance-coated part 21 are equidistant. As such, the welding of the conductive part 22 to the second end wall 12121 can be facilitated.

For another example, the included angle θ between the second end wall 12121 and the axial direction R of the post terminal 12 is greater than 90°. That is, in the direction from the perforation 12130 to the second side wall 12123, the second end wall 12121 extends obliquely in a direction toward the active substance-coated part 21. As such, the extension distance of the conductive part 22 along the second end wall 12121 can be increased, so as to improve the reliability of the electrical connection. Illustratively, the included angle θ between the second end wall 12121 and the axial direction R of the post terminal 12 may be 90°-145°, for example, 100°, 110°, 120°, 130°, 140°, etc. Such a configuration makes the second end wall 12121 easy to process and facilitates the electrical connection to the conductive part 22, while adequately utilizing the space in the post terminal 12 to accommodate the conductive part 22.

For yet another example, the included angle θ between the second end wall 12121 and the axial direction R of the post terminal 12 is less than 90°. That is, in the direction from the perforation 12130 to the second side wall 12123, the second end wall 12121 extends obliquely in a direction away from the active substance-coated part 21. As such, the extension distance of the conductive part 22 along the second end wall 12121 can be increased, so as to improve the reliability of the electrical connection. Further illustratively, the included angle θ between the second end wall 12121 and the axial direction R of the post terminal 12 may be 45°-90°, for example, 50°, 60°, 70°, 80°, etc. Such a configuration makes the second end wall 12121 easy to process and facilitates the electrical connection to the conductive part 22, while adequately utilizing the space in the post terminal 12 to accommodate the conductive part 22.

Certainly, the present application is not limited to this. In other embodiments of the present application, the electrical connection position between the conductive part 22 and the second end wall 12121 may not extend in the length or width direction of the second end wall 12121, but may be a plurality of discretely arranged points. For example, the conductive part 22 is provided with a plurality of spaced-apart portions that are separately welded to the second end wall 12121, which will not be recited herein.

Referring to FIG. 25 again and further referring to FIG. 26, FIG. 26 is a partial cross-sectional view of a battery cell 10 according to some embodiments of the present application. No matter what the specific value of the included angle θ between the second end wall 12121 and the axial direction R of the post terminal 12 is, in the embodiments of the present application, when the conductive part 22 is electrically connected to the second end wall 12121, a second recess 12122 may be arranged on the second end wall 12121 as required. The second recess 12122 is a groove formed by a part of the second end wall 12121 recessed toward the end proximal to the active substance-coated part. At least a part of the electrical connection position between the conductive part 22 and the second end wall 12121 is located in the second recess 12122.

In the above technical solution, the part of the conductive part 22 located in the second recess 12122 is configured to match the second groove 12122 in shape and arranged to fit the second groove 12122 to achieve the electrical connection, such that the second recess 12122 can be used to pre-position and limit the electrical connection position of the conductive part 22, which is beneficial to accurately locating the position to achieve the electrical connection, thereby improving the production efficiency and improving the stability and reliability of the position of the electrical connection, so as to ensure the reliability and stability of the charging and discharging operations of the battery cell 10.

Referring to FIG. 26 again, in the embodiments of the present application, the connection manner between the post terminal 12 and the housing 11 is not limited. For example, the connection manner may be welding or riveting. For example, when the two are combined by riveting, the housing 11 is provided with a mounting hole 113, and the post terminal 12 is mounted by riveting at the mounting hole 113. Certainly, it will be appreciated that when the two are fitted by welding or other manners, the housing 11 may also be provided with a mounting hole 113 to allow the mounting of the post terminal 12 at the mounting hole 113.

Optionally, referring to FIG. 25 again, the second accommodating groove 12120 may be arranged corresponding to the position of the mounting hole 113, or in other words, on the projection plane perpendicular to the axial direction R of the post terminal 12. The orthographic projection of the second accommodating groove 12120 is located within the orthographic projection range of the mounting hole 113, such that the second accommodating groove 12120 may have a greater depth to accommodate more conductive parts 22, thereby reducing the space occupied by the conductive part 22 in the housing 11 to a greater extent.

In some embodiments, referring to FIG. 25 again, when the housing 11 is provided with a mounting hole 113 and the post terminal 12 is mounted in the mounting hole 113, in the axial direction R of the post terminal 12, the depth H3 of the second accommodating groove 12120 is greater than or equal to the minimum distance H4 from the post terminal outer end surface 123 to the mounting hole 113.

It should be noted that the specific shape of the second accommodating groove 12120 is not limited, and may be a regular shape or an irregular shape, e.g., a cylindrical groove with a rectangular, elliptical, or track-shaped cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc. It is worth noting that the running-track shape described herein refers to a shape in which the two short sides of a rectangle are replaced by convex curves.

Therefore, the depth H3 of the second accommodating groove 12120 refers to: the maximum depth of the second accommodating groove 12120 in the axial direction R of the post terminal 12. Since the depth H3 of the second accommodating groove 12120 in the axial direction R of the post terminal 12 is greater than or equal to the minimum distance H4 from the post terminal outer end surface 123 to the mounting hole 113, the volume of the post terminal 12 can be fully utilized, such that the second accommodating groove 12120 has a greater depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. Also, due to the greater depth, the second accommodating groove 12120 can accommodate the gas produced by the battery cell assembly 2 to ensure the reliability and stability of the battery cell 10, and can also accommodate more electrolyte to ensure the service life of the battery cell 10.

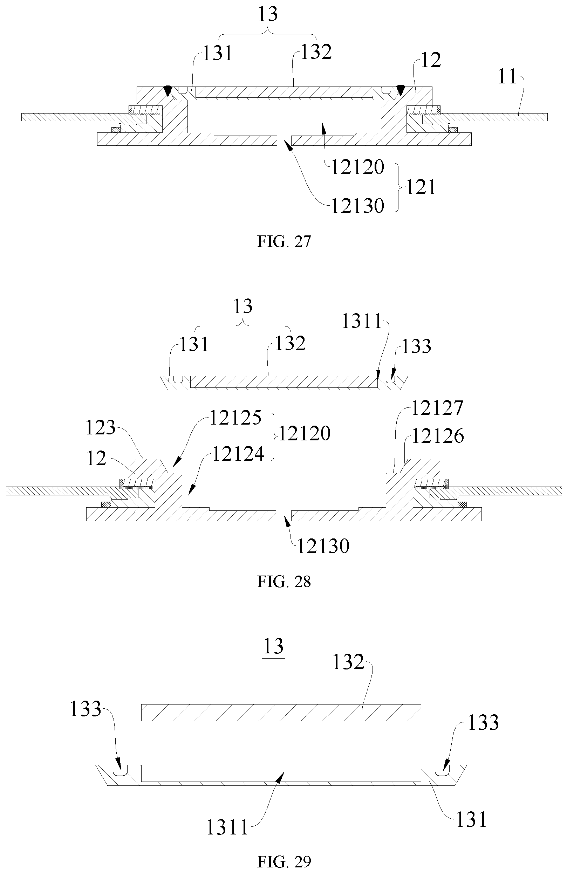

Referring to FIG. 36, and further referring to FIGs. 27 and 28, FIG. 27 is a partial cross-sectional view of a battery cell 10 according to some embodiments of the present application, and FIG. 28 is an exploded view of the battery cell 10 shown in FIG. 27. In the embodiments of the present application, when the accommodating part 121 is provided with the second accommodating groove 12120 of any of the above embodiments, optionally, the battery cell 10 may further include a first cover plate 13. The first cover plate 13 fits the post terminal 12, closes the opening of the second accommodating groove 12120, and is electrically connected to the post terminal 12.

In the above technical solution, arranging the first cover plate 13 to close the opening of the second accommodating groove 12120 allows to prevent the electrolyte in the housing 11 from leaking out of the opening of the second accommodating groove 12120. Moreover, since the first cover plate 13 closes the opening of the second accommodating groove 12120 and is electrically connected to the post terminal 12, an indirect electrical connection between the post terminal 12 and a busbar component can be easily achieved by using the first cover plate 13, and the connection area of the electrical connection can also be increased, thereby helping reduce the resistance of the electrical connection.

It is worth noting that the fitting manner and fitting position of the first cover plate 13 and the post terminal 12 are not limited, as long as the first cover plate 13 can close the opening of the second accommodating groove 12120. For example, in some embodiments, the first cover plate 13 can be welded to the post terminal 12. During the processing, the conductive part 22 may first pass through the perforation 12130 and is welded to the wall of the second accommodating groove 12120, and then the first cover plate 13 and the post terminal 12 are welded to close the opening of the second accommodating groove 12120.

It should be further noted that the specific structure of the first cover plate 13 is not limited. For example, in some optional embodiments, FIG. 29 is an exploded view of the first cover plate shown in FIG. 28. Referring to FIGs. 27-29, the first cover plate 13 includes a first conductive member 131 and a second conductive member 132 made of different materials, the first conductive member 131 fits and is electrically connected to the post terminal 12, and the second conductive member 132 fits and is electrically connected to the first conductive member 131.

In the above technical solution, the first cover plate 13 is arranged in a composite form, and the first conductive member 131 is set to be made of the same material as that of the post terminal 12, so as to facilitate the electrical connection between the first conductive member 131 and the post terminal 12. For example, the first conductive member 131 can be easy to be reliably and stably connected to the post terminal 12 through welding. Furthermore, since the second conductive member 132 is made of a different material from that of the first conductive member 131, the electrical connection between the second conductive member 132 and a busbar component and the like made of a different material from that of the post terminal 12 is facilitated. For example, the second conductive member 132 can be easy to be reliably and stably connected to a busbar component made of the same material as that of the second conductive member 132 through welding.

For example, when the post terminal 12 is a negative electrode post terminal, the post terminal 12 is a copper post, and when the busbar component is an aluminum plate, the first conductive member 131 may be made of copper, and the second conductive member 132 may be made of aluminum. In this case, the post terminal 12 and the first conductive member 131 are made of the same material and can be effectively welded, and the second conductive member 132 and the busbar component are made of the same material and can be effectively welded, thereby effectively achieving an indirect electrical connection between the post terminal 12 and the busbar component through the first cover plate 13. Moreover, the welding of the post terminal 12 to the first conductive member 131 is welding between the copper materials, which has good fluidity and is not prone to cracks, thereby helping improve the sealing effect of the welding position.

Referring to FIGs. 27-29 again, in some optional examples, the first conductive member 131 is located between the second accommodating groove 12120 and the second conductive member 132. In the above technical solution, since the first conductive member 131 is located between the second containing groove 12120 and the second conductive member 132, the second containing groove 12120 and the second conductive member 132 can be separated. Therefore, when the electrolyte in the housing 11 enters the second accommodating groove 12120 through the perforation 12130, the first conductive member 131 can be used to prevent the part of the electrolyte from making contact with the second conductive member 132, so as to solve the corrosion problem of the second conductive member 132 by the electrolyte.

It is worth noting that the fitting manner of the first conductive member 131 and the second conductive member 132 is not limited. For example, in some embodiments, referring to FIGs. 27-29, the first conductive member 131 is provided with a second groove 1311, the second conductive member 132 is embedded in the second groove 1311, and an opening of the second groove 1311 is formed on the surface of the first conductive member 131 on the side distal to the second accommodating groove 12120, such that the second conductive member 132 is exposed at the opening of the second groove 1311. Alternatively, in other embodiments, the connection manner of the first conductive member 131 and the second conductive member 132 may be a fastening connection, a snap-fit, or the like.

It should also be noted that the "exposure" of the second conductive member 132 at the opening of the second groove 1311 means that the first conductive member 131 does not shade the second conductive member 132 at the opening position of the second groove 1311, and the second conductive member 132 does not necessarily protrude from the opening of the second groove 1311. For example, the second conductive member 132 may be flush with the surface of the first conductive member 131 on the side distal to the second accommodating groove 12120, or the second conductive member 132 may protrude from the surface of the first conductive member 131 on the side distal to the second accommodating groove 12120.

In the above technical solution, embedding the second conductive member 132 in the first conductive member 131 can reduce the difficulties in assembling the first conductive member 131 and the second conductive member 132, improve the stability and convenience of the fit of the first conductive member 131 and the second conductive member 132, reduce the thickness of the first cover plate 13, and reduce the space occupied by the first cover plate 13, so as to improve the space utilization of the battery cell 10. Also, since the second conductive member 132 may be exposed from the surface of the first conductive member 131 on the side distal to the second accommodating groove 12120 through the opening of the second groove 1311, it is conducive to achieving the electrical connection between the second conductive member 132 and the busbar component outside the post terminal 12.

In addition, since the opening of the second groove 1311 is formed on the surface of the first conductive member 131 on the side distal to the second accommodating groove 12120, it means that the second groove 1311 is open in a direction away from the active substance-coated part 21, such that the part of the first conductive member 131 configured to define the wall of the second groove 1311 is located between the second accommodating groove 12120 and the second conductive member 132, so as to separate the second accommodating groove 12120 from the second conductive member 132, thereby preventing the electrolyte entering the second groove 1311 from contacting the second conductive member 132 and reducing leakage of the electrolyte.

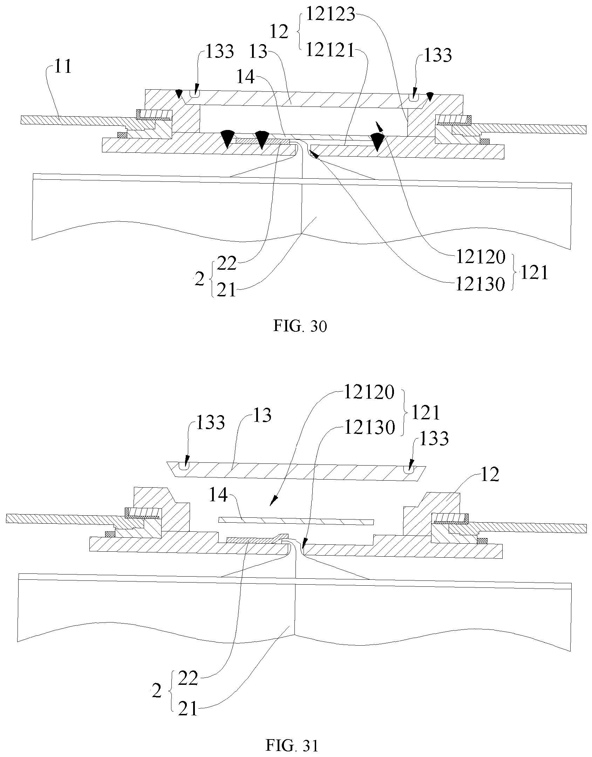

Certainly, in other embodiments, the first cover plate 13 may not be in a composite form composed of more than one material. For example, in other embodiments of the present application, FIG. 30 is a partial cross-sectional view of a battery cell according to some embodiments of the present application, and FIG. 31 is an exploded view of the battery cell shown in FIG. 30. Referring to FIGs. 30 and 31, the first cover plate 13 may also be integrally configured into a non-composite form made of the same material, for example, for adapting to the positive electrode post terminal, which will not be recited herein.

Referring to FIGs. 27-29 again, in some embodiments, the first cover plate 13 is also embedded in the opening of the second accommodating groove 12120. In the above technical solution, embedding the first cover plate 13 in the second accommodating groove 12120 can reduce the difficulty in assembling the first cover plate 13 and the post terminal 12, improve the stability of assembly of the first cover plate 13 and the post terminal 12 and the reliability and convenience of the connection, and reduce the space occupied by the first cover plate 13 outside the post terminal 12. Moreover, since the first cover plate 13 is embedded in the opening of the second accommodating groove 12120, there is sufficient space in the second accommodating groove 12120 to accommodate the conductive part 22.

Certainly, in other embodiments of the present application, the fitting manner of the first cover plate 13 and the post terminal 12 is not limited to being embedded in the second accommodating groove 12120. The first cover plate 13 may also be directly arranged outside the post terminal 12 as a covering, that is, directly lids the opening of the second accommodating groove 12120, as long as it is conducive to the fit to the busbar component of the battery 100, which is not limited in the embodiments.

Referring to FIGs. 27-29 again, optionally, in the embodiments of the present application, at least a part of the wall surface at the opening of the second accommodating groove 12120 formed by the post terminal 12 is an inclined guiding surface 12126, and the inclined guiding surface 12126 is configured to guide the first cover plate 13 to fit the opening of the second accommodating groove 12120. In the above technical solution, processing the wall surface at the opening of the second accommodating groove 12120 into an inclined surface with guidance functionality can reduce the difficulty in assembling the first cover plate 13 and the second accommodating groove 12120, and improve the assembly efficiency of the first cover plate 13 and the second accommodating groove 12120. Moreover, when the first cover plate 13 is welded to the inclined guiding surface 12126, the area at the welding position can be increased, thereby improving the reliability of the welding connection between the first cover plate 13 and the post terminal 12 and mitigating the problem of weld pool collapse or laser penetration into the post terminal 12 during welding.

Specifically, referring to FIGs. 27-29, the second accommodating groove 12120 includes a first groove segment 12124 and a second groove segment 12125 located on the side of the first groove segment 12124 proximal to the post terminal outer end surface 123. The cross-sectional area of the second groove segment 12125 is greater than the cross-sectional area of the first groove segment 12124, such that the second accommodating groove 12120 is in the shape of a stepped groove, and the connection position of the first groove segment 12124 and the second groove segment 12125 forms a third step surface 12127. As such, when the first cover plate 13 is embedded in the second accommodating groove 12120, it can be specifically embedded in the second groove segment 12125 and supported by the third step surface 12127.

In the above technical solution, by providing the second accommodating groove 12120 in a stepped groove form, the first cover plate 13 can stably fit the opening position of the second accommodating groove 12120, thereby improving the connection stability between the first cover plate 13 and the post terminal 12. In addition, by defining the groove depth of the first groove segment 12124, the second accommodating groove 12120 is provided with sufficient space to accommodate the conductive part 22.

Further, when the wall surface at the opening of the second accommodating groove 12120 formed by the post terminal 12 is the inclined guiding surface 12126, the cross-sectional area of the second groove segment 12125 may be set to gradually increase in a direction toward the post terminal outer end surface 123, such that the side wall of the second groove segment 12125 is formed as the inclined guiding surface 12126, which facilitates processing and can easily and effectively meet the guidance requirements.

Referring to FIGs. 27-29 again, in the embodiments of the present application, the first cover plate 13 may also be provided with a stress relief groove 133 as required. The stress relief groove 133 is located in the outer peripheral region of the first cover plate 13 to assist the first cover plate 13 in stress relief. In the above technical solution, by arranging the stress relief groove 133 on the first cover plate 13, the stress generated during the processing of the first cover plate 13 itself or the electrical connection between the first cover plate 13 and the post terminal 12 can be relieved, so as to mitigate the related problems such as deformation or damage of the first cover plate 13 caused by stress.

Specifically, when the first cover plate 13 and the second accommodating groove 12120 are embedded and welded, the stress generated by welding can be relieved by utilizing the stress relief groove 133, thereby improving the lateral heat conduction and reducing the probability of damage or deformation of the first cover plate 13. Meanwhile, when the first cover plate 13 is in the above composite form including the first conductive member 131 and the second conductive member 132, the stress relief groove 133 may be arranged on the first conductive member 131 and located in the outer peripheral region of the second conductive member 132. When the first conductive member 131 and the second accommodating groove 12120 are embedded and welded, the stress generated by welding can be relieved by utilizing the stress relief groove 133, thereby improving the lateral heat conduction and reducing the probability of damage or deformation of the second conductive member 132. Moreover, when the second conductive member 132 and the first conductive member 131 are embedded and welded, the stress generated by welding can be relieved by utilizing the stress relief groove 133, thereby improving the lateral heat conduction and reducing the deformation probability of the first conductive member 131 that may fail the embedment of the first conductive member 131 in the second accommodating groove 12120.

Referring to FIGs. 30 and 31, in the embodiments of the present application, the battery cell 10 may also be provided with a second cover plate 14 as required. The second cover plate 14 lids the outside of the perforation 12130 and is located outside the conductive part 22 in the second accommodating groove 12120.

It is worth noting that when the battery cell 10 includes the second cover plate 14, the battery cell 10 may or may not include the first cover plate 13. Furthermore, when the battery cell 1 includes both the second cover plate 14 and the first cover plate 13, the first cover plate 13 may be in a composite form using more than one material, or may be in the non-composite form using one material.

In the above technical solution, at least a part of the conductive part 22 is located in the second accommodating groove 12120, and the second cover plate 14 lids the part of the conductive part 22. The second cover plate 14 also lids the perforation 12130, such that when the electrolyte enters the second accommodating groove 12120 through the perforation 12130, the second cover plate 14 can alleviate the problem of electrolyte overflowing from the post terminal 12 through the part, thereby improving the reliability of the battery cell 10.

For example, as shown in FIGs. 30 and 31, when a part of the conductive part 22 is sandwiched between the second cover plate 14 and the second end wall 12121, the part of the conductive part 22, the second cover plate 14, and the second end wall 12121 can be welded together by using laser welding, so as to improve the reliability of the connection between the post terminal 12 and the conductive part 22. In addition, since the second cover plate 14 can press the conductive part 22, the second cover plate 14 may be used to improve the stability of the conductive part 22 accommodated in the second accommodating groove 12120.

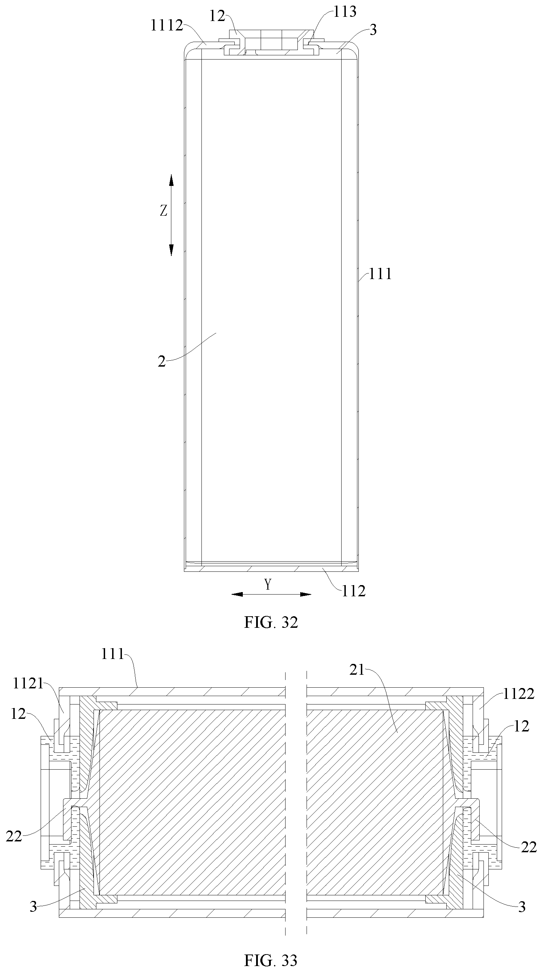

Referring to FIG. 32, FIG. 32 is an assembly schematic of a battery cell 10 according to some embodiments of the present application. When one opening 1110 is present on the housing body 111, the housing cover 112 lids the opening 1110, and the support 3 is located at the end of the battery cell assembly 2 distal to the opening 1110.

The opening 1110 may be located on the top wall, the bottom wall, or a side wall of the housing body 111. When the opening 1110 is located at the bottom wall of the housing body 111, the other walls are all of a closed structure. The battery cell assembly 2 with the support 3 and the insulating member 4 can only be loaded into the housing body 111 from the opening 1110. After the battery cell assembly 2 is mounted in place in the housing body 111, the housing cover 112 lids the opening 1110 to seal the opening 1110. The insulating member 4 is pressed between the top wall of the housing body 111 and the support 3, thus reducing the fall-off risk of the insulating member 4, the failure risk of the battery cell assembly 2 due to exposure, and the corrosion risk of the housing 11, thereby improving the reliability and stability of the battery cell 10.

In the above technical solution, one opening 1110 is arranged on the housing body 111, and the support 3 is arranged at the end of the battery cell assembly 2 distal to the opening 1110. A battery cell assembly 2 with the support 3 and the insulating member 4 can only be loaded into the housing body 111 from the opening 1110 in a unique housing direction is unique, which is conducive to improving mounting efficiency. The housing 11 will not scratch the edge of the insulating member 4 or the connection position between the insulating member 4 and the support 3, so as to improve the connection reliability between the insulating member 4 and the support 3, reduce the fall-off risk of the insulating member 4, the corrosion risk of housing 11 due to the exposure of the battery cell assembly 2, the failure risk of the battery cell assembly 2, and the electrolyte leakage risk, thereby improving the reliability and stability of the battery cell 10.

Optionally, all the post terminals 12 may be arranged on the housing cover 112. That is, all the post terminals 12 are located on the side of the battery cell assembly 2 distal to the support 3, and the conductive part 22 may be electrically connected to the post terminal 12 on the housing cover 112 correspondingly.

Optionally, one of the post terminals 12 may be arranged on the housing cover 112, and the other post terminal 12 may be arranged on the end wall of the housing body 111 opposite to the opening 1110. One of the conductive parts 22 may be electrically connected to the post terminal 12 on the housing cover 112.

Optionally, all the post terminals 12 may be arranged on the end wall of the housing body 111 opposite to the opening 1110, such that the conductive part 22 can penetrate through the support 3 and is electrically connected to the post terminal 12 on the end wall of the housing body 111 correspondingly.

Referring to FIG. 32 again, the housing body 111 is provided with a mounting wall 1112 opposite to the opening 1110, and at least one post terminal 12 is arranged on the mounting wall 1112. In this way, the battery cell assembly 2 enters the housing body 111 through the opening 1110, and the conductive part 22 is directly opposite to the post terminal 12, so as to facilitate the connection of the conductive part 22 to the post terminal 12, thereby improving the assembly efficiency of the battery cell 10.

Illustratively, the top wall of the housing body 111 is the mounting wall 1112, the bottom wall of the housing body 111 is provided with the opening 1110, and the housing cover 112 is arranged at the bottom of the housing body 111. The battery cell assembly 2 can be mounted into the housing body 111 from bottom to top in the direction Z, such that the conductive part 22 can be easily connected to the post terminal 12.

Referring to FIG. 33, FIG. 33 is an assembly schematic of a battery cell 10 according to some other embodiments of the present application. Two openings 1110 are present on the housing body 111. Each of the openings 1110 is lidded with one of the housing covers 112, and the support 3 is located at the end of the battery cell assembly 2 distal to any one of the openings 1110.

In the above technical solution, two openings 1110 are arranged in the housing body 111, and the support 3 is arranged at the end of the battery cell assembly 2 distal to any one of the openings 1110. A battery cell assembly 2 with two supports 3 and the insulating member 4 may be loaded into the housing body 111 from any one of the openings 1110, and a proper housing direction can be selected as needed. After the battery cell assembly 2 is mounted in place in the housing body 111, a part of the insulating member 4 is pressed between the wall of the housing body 111 opposite to one of the openings 1110 and the corresponding support 3, and the other part of the insulating member 4 is pressed between the wall of the housing body 111 opposite to the other opening 1110 and the corresponding support 3, which further reduces the fall-off risk of the insulating member 4, the failure risk of the battery cell assembly 2 due to exposure, and the corrosion risk of the housing 11, thereby improving the reliability and stability of the battery cell 10.

The two openings 1110 may be located on the top wall, the bottom wall, or a side wall of the housing body 111. The two openings 1110 may be arranged on two walls of the housing body 111 arranged opposite to each other. For example, the two openings 1110 may be separately arranged on the top wall and the bottom wall of the housing body 111. For another example, the two openings 1110 may be separately arranged on two side walls of the housing body 111 arranged opposite to each other. The two openings 1110 may also be arranged on two adjacent walls of the housing body 111. For example, the two openings 1110 may be separately arranged on the top wall and an adjacent side wall of the housing body 111. For another example, the two openings 1110 may be separately arranged on the bottom wall and an adjacent side wall of the housing body 111. For another example, the two openings 1110 may be separately arranged on the two adjacent side walls of the housing body 111.

When the two openings 1110 are separately formed on two walls of the housing body 111 arranged opposite to each other, the other walls are all of a closed structure, where one opening 1110 is lidded with a first housing cover 1121, and the other opening 1110 is lidded with a second housing cover 1122. All the post terminals 12 may be arranged on the first housing cover 1121, or all the post terminals 12 may be arranged on the second housing cover 1122, or a part of the post terminals 12 are arranged on the first housing cover 1121 or the second housing cover 1122, and the other part of the post terminals 12 are arranged on the housing body 111.

Referring to FIG. 33 again, the first housing cover 1121 and the second housing cover 1122 are each provided with one post terminal 12. The two ends of the battery cell assembly 2 are each provided with one support 3. The battery cell assembly 2 with the support 3 and the insulating member 4 can be loaded into the housing body 111 from any one of the openings 1110. After the battery cell assembly 2 is mounted in place in the housing body 111, the two housing covers 112 separately lid the two openings 1110 to seal the corresponding openings 1110. After the battery cell assembly 2 with the two supports 3 is housed, one of the conductive parts 22 penetrates through one support 3 and is electrically connected to the post terminal 12 on the first housing cover 1121, and the other one of the conductive parts 22 penetrates through the other support 3 and is electrically connected to the post terminal 12 on the second housing cover 1122.

In some embodiments, at least one post terminal 12 is arranged on a housing wall on the side of the housing 11 proximal to the support 3. The battery cell assembly 2 with the support 3 and the insulating member 4 enters the housing body 111 through the opening 1110, and the conductive part 22 is directly opposite to the post terminal 12, so as to facilitate the connection of the conductive part 22 to the post terminal 12, thereby improving the assembly efficiency of the battery cell 10.

Referring to FIGs. 3-6 again, a battery cell 10 according to specific embodiments of the present application is described.

In the embodiments of the present application, the battery cell 10 is in the shape of a cuboid, and the height direction of the battery cell 10 is a first direction Z, the length direction of the battery cell 10 is a second direction X, and the thickness direction of the battery cell 10 is a third direction Y. The battery cell 10 includes a housing 11. The housing 11 includes a housing body 111 and a housing cover 112. The housing body 111 is of a square annular structure, with one end of the housing body 111 in the first direction Z open and the other end in the first direction Z closed. The housing cover 112 lids the open position of the housing body 111. Two post terminals 12 are arranged at the closed end of the housing body 111 in the first direction Z and spaced apart in the second direction X. The two post terminals 12 are the positive electrode post terminal and the negative electrode post terminal.

Both post terminals 12 are provided with the accommodating part 121. The accommodating part 121 includes the second accommodating groove 12120. Specifically, a first post terminal 12 includes a second end wall 12121 and a second side wall 12123. The second end wall 12121 is located on the side of the second side wall 12123 proximal to the housing cover 112. The second end wall 12121 and the second side wall 12123 define, in an enclosing manner, the second accommodating groove 12120. The surface of the first post terminal 12 on the side distal to the housing cover 112 is the post terminal outer end surface 123. The opening of the second accommodating groove 12120 is formed on the post terminal outer end surface 123. The second end wall 12121 is provided with a perforation 12130.

The battery cell 10 further includes a battery cell assembly 2, a support 3, and an insulating member 4. The battery cell assembly 2 includes an active substance-coated part 21 and a conductive part 22. The active substance-coated part 21 is accommodated in the housing 11. The support 3 is arranged at one end of the active substance-coated part 21 and is located between the closed end of the housing body 111 in the first direction Z and the active substance-coated part 21. The support 3 is provided with two via holes 311 spaced apart in the second direction X.

The support 3 is provided with a body part 36 and an extending part 37 arranged on the circumference of the body part 36. The projection of the body part 36 on the plane of the housing cover 112 is located within the projection of the active substance-coated part 21 on the plane of the housing cover 112, and the projection of the extending part 37 on the plane of the housing cover 112 is located outside the projection of the active substance-coated part 21 on the plane of the housing cover 112.

In the technical solution of the embodiment of the present application, an independent support 3 is used to replace the plastic member embedded under the top cover in the related art, and the support 3 is fitted to the battery cell assembly 2 before they are housed together. In the process of loading the battery cell assembly 2 with the support 3 into the housing 11, the support 3 can restrain the active substance-coated part 21, and the extending part 37 can protect the active substance-coated part 21, thus reducing the probability that the active substance-coated part 21 contacts the housing 11, minimizing the probability of the housing 11 scratching the active substance-coated part 21, improving the reliability of the battery cell 10, simplifying the mounting procedures, and improving the production efficiency.

According to some embodiments of the present application, the present application further provides a battery 100, including the battery cell 10 described in any of the above solutions.

In the above technical solution, since the battery 100 is provided with the above battery cell 10, the support 3 can restrain the active substance-coated part 21, and the extending part 37 can protect the active substance-coated part 21, thus reducing the probability that the active substance-coated part 21 contacts the housing 11, minimizing the probability of the housing 11 scratching the active substance-coated part 21, improving the reliability of the battery 100, simplifying the mounting procedures, and improving the production efficiency.

According to some embodiments of the present application, the present application further provides an electric device 1000, including the battery 100 described in the above solution, where the battery 100 is used to power the electric device 1000.

In the above technical solution, providing the electric device 1000 with the above battery 100 and the improved working reliability and stability of the battery 100 can improve the working reliability and stability of the electric device 1000. It will be appreciated that, when the electric device 1000 is a vehicle, the prolonged service life of the battery 100 is conducive to improving the vehicle's endurance mileage.

The electric device 1000 may be any one of the aforementioned devices or systems that apply the battery 100.

It should be noted that unless conflicting, the embodiments and features of the embodiments in the present application may be combined with each other.

The above embodiments are only preferred ones of the present application, and are not intended to limit the present application. For those skilled in the art, the present application can be modified and varied. Any modification, equivalent replacement, improvement, and the like made within the spirit and principle of the present application shall all fall within the claimed scope of the present application.

## Claims

1. A battery cell (10), comprising:
a housing (11), comprising a housing cover (112) and a housing body (111) provided with an opening (1110), the housing cover (112) lidding the opening (1110);
a battery cell assembly (2), comprising an active substance-coated part (21), the active substance-coated part (21) being arranged in the housing (11); and
a support (3), arranged at the end of the active substance-coated part (21) distal to the opening (1110) and fitting the battery cell assembly (2),
wherein the support (3) is provided with a body part (36) and an extending part (37) arranged on the circumference of the body part (36); the projection of the body part (36) on the plane of the housing cover (112) is located within the projection of the active substance-coated part (21) on the plane of the housing cover (112), and the projection of the extending part (37) on the plane of the housing cover (112) is located outside the projection of the active substance-coated part (21) on the plane of the housing cover (112).

2. The battery cell (10) according to claim 1, wherein the extending parts (37) are located on two opposite sides of the body part (36) in a preset direction parallel to the plane of the housing cover (112).

3. The battery cell (10) according to claim 2, wherein the extending part (37) is an annular structure surrounding the body part (36).

4. The battery cell (10) according to claim 1, wherein the edge of the surface of the extending part (37) facing away from the housing cover (112) is provided with a guiding surface (35) comprising an arc-shaped surface and/or an inclined surface.

5. The battery cell (10) according to any one of claims 1-4, wherein the support (3) is in snap-fit with or bonded to the battery cell assembly (2).

6. The battery cell (10) according to any one of claims 1-4, wherein a limiting protruding part (38) is arranged on the side of the extending part (37) proximal to the housing cover (112), and the support (3) is in snap-fit with the active substance-coated part (21) via the limiting protruding part (38).

7. The battery cell (10) according to claim 6, wherein the surface of the limiting protruding part (38) on the side facing the active substance-coated part (21) comprises:
a first surface (381), fitting to a side wall of the active substance-coated part (21); and/or
a second surface (382), with a distance to the active substance-coated part (21) gradually increasing in a direction from the support (3) toward the opening (1110).

8. The battery cell (10) according to any one of claims 1-7, further comprising:
an insulating member (4), wrapped around the active substance-coated part (21) and connected to the extending part (37).

9. The battery cell (10) according to claim 8, wherein the insulating member (4) is connected to a circumferential wall surface (370) of the extending part (37).

10. The battery cell (10) according to claim 9, wherein the circumferential wall surface (370) is provided with a first step surface (371) and a second step surface (372); the second step surface (372) is located on the side of the first step surface (371) proximal to the housing cover (112), and the second step surface (372) is closer to the active substance-coated part (21) than the first step surface (371) is; the insulating member (4) is connected to the second step surface (372).

11. The battery cell (10) according to claim 10, wherein the first step surface (371) is farther from the active substance-coated part (21) than an outer side surface of the insulating member (4) is.

12. The battery cell (10) according to any one of claims 1-7, further comprising:
an insulating member (4), wrapped around the active substance-coated part (21) and connected to the surface of the body part (36) distal to the housing cover (112).

13. The battery cell (10) according to any one of claims 1-12, wherein a post terminal (12) is arranged on the housing (11); the battery cell assembly (2) further comprises a conductive part (22) connected to the side of the active substance-coated part (21) proximal to the body part (36); the body part (36) is provided with a via hole (311), and the conductive part (22) passes through the via hole (311) to be connected to the post terminal (12).

14. The battery cell (10) according to claim 13, wherein the support (3) is of an integrated structure; or, the support (3) is of a split-type structure and comprises a first support (33) and a second support (34) that are separately formed; the first support (33) and the second support (34) define the via hole (311) therebetween.

15. The battery cell (10) according to claim 13, wherein a receiving groove (393) in communication with the via hole (311) is arranged on the side of the body part (36) facing away from the active substance-coated part (21) and is configured to accommodate at least a part of the post terminal (12).

16. The battery cell (10) according to claim 13, wherein a positioning part (32) is arranged on the side of the body part (36) facing away from the active substance-coated part (21); the positioning part (32) is set on the circumferential direction of the via hole (311), and extends in a direction toward the post terminal (12).

17. The battery cell (10) according to claim 16, wherein an accommodating part (121) is arranged on the post terminal (12); at least a part of the conductive part (22) is accommodated in the accommodating part (121); at least a part of the positioning part (32) extends into the accommodating part (121).

18. The battery cell (10) according to claim 13, wherein a guiding groove (312) in communication with the via hole (311) is formed on the side of the body part (36) facing the active substance-coated part (21) and accommodates at least a part of the conductive part (22); the cross-sectional area of the guiding groove (312) gradually increases in a direction from the body part (36) toward the active substance-coated part (21).

19. The battery cell (10) according to claim 18, wherein the support (3) is provided with at least one first liquid injection guide groove (392), and the first liquid injection guide groove (392) is located on the side of the support (3) facing the active substance-coated part (21); at least one of the first liquid injection guide grooves (392) is in communication with the guiding groove (312).

20. The battery cell (10) according to any one of claims 1-19, wherein the support (3) is provided with a first liquid injection guide groove (392), and the first liquid injection guide groove (392) is located on the side of the support (3) facing the active substance-coated part (21); and/or the support (3) is provided with a second liquid injection guide groove, and the second liquid injection guide groove is located on the side of the support (3) facing away from the active substance-coated part (21).

21. The battery cell (10) according to any one of claims 1-20, wherein the side of the support (3) facing the battery cell assembly (2) is provided with a clearance part (391) configured to provide clearance for the outer edge on the side of the battery cell assembly (2) facing the support (3).

22. The battery cell (10) according to any one of claims 1-21, wherein the battery cell assembly (2) further comprises the conductive part (22), and the conductive part (22) is connected to the side of the active substance-coated part (21) proximal to the body part (36);
a post terminal (12) is arranged on the housing (11),an accommodating part (121) is arranged on the post terminal (12), and at least a part of the conductive part (22) is accommodated in the accommodating part (121) and connected to the post terminal (12).

23. The battery cell (10) according to claim 22, wherein the accommodating part (121) is provided with a first accommodating groove (12110), the surface of the post terminal (12) on the side facing the active substance-coated part (21) is a post terminal inner end surface (122), an opening of the first accommodating groove (12110) is formed on the post terminal inner end surface (122), and at least a part of the conductive part (22) is accommodated in the first accommodating groove (12110).

24. The battery cell (10) according to claim 22, wherein the accommodating part (121) is provided with a second accommodating groove (12120), the surface of the post terminal (12) on the side distal to the active substance-coated part (21) is a post terminal outer end surface (123), an opening of the second accommodating groove (12120) is formed on the post terminal outer end surface (123), the second accommodating groove (12120) is in communication with the interior of the housing (11) through a perforation (12130), and the conductive part (22) is provided in the perforation (12130) in a penetrating manner and is at least partially accommodated in the second accommodating groove (12120).

25. The battery cell (10) according to any one of claims 1-24, wherein the openings (1110) are provided in a quantity of two, each of the openings (1110) is provided with one of the housing covers (112), and the support (3) is located at the end of the active substance-coated part (21) distal to any one of the openings (1110).

26. The battery cell (10) according to any one of claims 1-25, wherein at least one post terminal (12) is arranged on a housing wall on the side of the housing (11) proximal to the support (3).

27. A battery (100), comprising a battery cell (10) according to any one of claims 1-26.

28. An electric device (1000), comprising a battery (100) according to claim 27.
